# EUROPEAN PATENT APPLICATION

(11) **EP 4 686 270 A1**
(43) Date of publication of application: **28.01.2026**
(21) Application number: 24855504.7
(22) Date of filing: 08.07.2024
(51) Int. Cl.: H04W 52/02, G06F 30/3312

(54) **CONTROL SYSTEM AND CONTROL METHOD FOR AGGREGATION CHIP, AND ELECTRONIC DEVICE**

(30) Priority: 23.08.2023 CN 202311073840
(71) Applicant: Huawei Technologies Co., Ltd., Shenzhen, Guangdong 518129 (CN)
(72) Inventor: LI, Yuan, Shenzhen, Guangdong 518129 (CN); HUANG, Zhe, Shenzhen, Guangdong 518129 (CN); ZHAO, Fanfan, Shenzhen, Guangdong 518129 (CN); KUANG, Huogen, Shenzhen, Guangdong 518129 (CN); JIANG, Qiangguo, Shenzhen, Guangdong 518129 (CN); PAN, Jianfeng, Shenzhen, Guangdong 518129 (CN)
(74) Representative: Goddar, Heinz J.
(86) International application number: PCT/CN2024/104262
(87) International publication number: WO 2025/039775

(57) **Abstract**

This application provides a control system and control method for an aggregation chip, and an electronic device. The control system includes: a monitoring module, configured to monitor a to-be-transmitted signal of the aggregation chip; a switching module, configured to switch the aggregation chip from a low-power mode to a high-speed transmission mode when the monitoring module detects a to-be-transmitted high-speed signal, where power consumption in the low-power mode is lower than that in the high-speed transmission mode; and the aggregation chip, configured to transmit the high-speed signal in the high-speed transmission mode. The control system provided in this application enables the aggregation chip to operate in the low-power mode. The low-power mode may be, for example, a sleep mode or a low-speed transmission mode used to transmit low-speed signals. This effectively resolves a problem of unnecessary power waste of the aggregation chip, to enhance battery endurance of the electronic device.

## Description

This application claims priority to Chinese Patent Application No. 202311073840.6, filed with the China National Intellectual Property Administration on August 23, 2023 and entitled "CONTROL SYSTEM AND CONTROL METHOD FOR AGGREGATION CHIP, AND ELECTRONIC DEVICE", which is incorporated herein by reference in its entirety.

### TECHNICAL FIELD

This application relates to the field of chip technologies, and in particular, to a control system and control method for an aggregation chip, and an electronic device.

### BACKGROUND

As terminal technologies continuously develop, a foldable electronic device with a flexible display has received widespread attention. The foldable electronic device includes a primary board and a secondary board. The primary board and the secondary board are connected through a through-shaft FPC. To reduce a size of the through-shaft FPC, an aggregation chip may be disposed between the primary board and the secondary board for signal aggregation and transmission.

In the related technology, an aggregation chip is kept in a power-on working state as long as a system of a foldable device is in a service state. However, a percentage of duration of signal transmission by the aggregation chip in total duration of being in the working state is very low (less than 0.5%). Consequently, the aggregation chip operates without loads for a large amount of time. In addition, to meet transmission requirements for high-speed signals, such as a high rate, a low latency, and high response sensitivity, the aggregation chip is usually designed according to maximum application specifications. The aggregation chip always operates in a high-speed transmission mode with high power consumption. However, high-speed signals account for an very small part of to-be-transmitted signals. Most of the time, to-be-transmitted signals of the aggregation chip may include only low-speed signals. The foregoing factors result in unnecessary power waste of the aggregation chip, reducing battery endurance of an electronic device.

### SUMMARY

Embodiments of this application provide a control system and control method for an aggregation chip, and an electronic device, which can effectively resolve a problem of unnecessary power waste of the aggregation chip, to enhance battery endurance of the electronic device.

According to a first aspect, a control system for an aggregation chip is provided, including: a monitoring module, configured to monitor a to-be-transmitted signal of the aggregation chip; a switching module, configured to switch the aggregation chip from a low-power mode to a high-speed transmission mode when the monitoring module detects a to-be-transmitted high-speed signal, where power consumption in the low-power mode is lower than that in the high-speed transmission mode; and the aggregation chip, configured to transmit the high-speed signal in the high-speed transmission mode.

According to the control system for an aggregation chip provided in embodiments of this application, the aggregation chip includes the low-power mode and the high-speed transmission mode. When the monitoring module detects the to-be-transmitted high-speed signal, the switching module can switch the aggregation chip from the current low-power mode to the high-speed transmission mode, so that the aggregation chip can transmit the high-speed signal in the high-speed transmission mode, to meet transmission requirements for the high-speed signal, such as a high rate, a low latency, and the like. When there is no to-be-transmitted high-speed signal, the aggregation chip may operate in the low-power mode. For example, the low-power mode may be a default mode of the aggregation chip. The power consumption in the low-power mode is lower than that in the high-speed transmission mode. This can avoid power waste.

According to the control system for an aggregation chip provided in embodiments of this application, because the aggregation chip has a plurality of modes, an appropriate mode may be selected for the aggregation chip based on a specific service requirement. The aggregation chip is switched to the high-speed transmission mode with high power consumption only when the to-be-transmitted high-speed signal is detected, and may operate in the low-power mode when no high-speed signal needs to be transmitted. In comparison with the conventional technology in which the aggregation chip always operates in the high-speed transmission mode, in this application, power consumption can be allocated based on an actual service requirement. This can avoid unnecessary power waste of the aggregation chip, to enhance battery endurance of an electronic device. In addition, the aggregation chip in this application does not need to always operate in the high-speed transmission mode. This can reduce a loss of the aggregation chip, to prolong a service life of the aggregation chip.

In a possible implementation, after the high-speed signal is transmitted, the switching module is further configured to switch the aggregation chip from the high-speed transmission mode back to the low-power mode.

In other words, after the high-speed signal is transmitted, the switching module can automatically switch the aggregation chip from the high-speed transmission mode back to the low-power mode. The low-power mode may be used as a default mode of the aggregation chip, so that the aggregation chip can maximally operate in the low-power mode, to avoid unnecessary power waste of the aggregation chip to a maximum extent, and prolong a battery life of the electronic device.

Optionally, after determining that the high-speed signal is transmitted, the switching module may immediately switch the aggregation chip from the high-speed transmission mode back to the low-power mode, to enable the aggregation chip to maximally operate in the low-power mode.

Optionally, it may be determined based on an instruction from a service module that the high-speed signal is transmitted.

In a possible implementation, if the monitoring module does not detect a new high-speed signal within preset duration after the high-speed signal is transmitted, the switching module is further configured to switch the aggregation chip from the high-speed transmission mode back to the low-power mode. If a new high-speed signal is detected within the preset duration, the aggregation chip is further configured to transmit the new high-speed signal in the high-speed transmission mode.

In other words, after the high-speed signal is transmitted, the chip is not directly switched to the low-power mode, but waits for the preset duration, that is, remains idle (idle) for the preset duration in the high-speed transmission mode. If the monitoring module detects, within the preset duration, that a new high-speed signal needs to be transmitted, the aggregation chip directly transmits the new high-speed signal in the current high-speed transmission mode. If the monitoring module does not detect, within the preset duration, that a new high-speed signal needs to be transmitted, the switching module switches the aggregation chip from the high-speed transmission mode back to the low-power mode.

The foregoing setting can avoid frequent mode switching of the aggregation chip, to ensure transmission stability of the aggregation chip, and can also reduce a loss of the aggregation chip due to mode switching. In addition, for some continuous services, a high-speed signal may be continually sent a plurality of times in a period of time. Setting preset idle duration of the aggregation chip in the high-speed mode enables a subsequent new high-speed signal to be transmitted quickly and in time after arrival. A response speed is fast, to avoid a transmission lag due to mode switching.

In a possible implementation, the low-power mode is a low-speed transmission mode. When the monitoring module detects a to-be-transmitted low-speed signal, the aggregation chip is further configured to transmit the low-speed signal in a current mode.

In other words, transmission of a low-speed signal does not involve mode switching of the aggregation chip. When a low-speed signal arrives (is detected), the aggregation chip directly transmits it in the current mode. For example, if the aggregation chip is currently in the low-speed transmission mode, the low-speed signal is directly transmitted in the low-speed transmission mode. The low-speed transmission mode can meet transmission requirements for the low-speed signal. If the aggregation chip is currently in the high-speed transmission mode, the low-speed signal is directly transmitted at a high speed in the high-speed transmission mode.

The aggregation chip provided in embodiments of this application has two working modes: the low-speed transmission mode and the high-speed transmission mode. The low-speed transmission mode is used as the default mode to transmit low-speed signals. The high-speed transmission mode can be used to transmit not only high-speed signals, but also low-speed signals. The foregoing setting allows for a proper balance between reducing operating power consumption and reducing a mode switching frequency. Power consumption can be allocated based on the actual service requirement. When there is no high-speed signal, the chip works in the low-speed transmission mode by default. When a high-speed signal is detected, the chip is switched to the high-speed transmission mode to transmit the high-speed signal. This can avoid unnecessary power waste of the aggregation chip, to enhance battery endurance of the electronic device. In addition, a low-speed signal can be transmitted in any mode. This can avoid frequent mode switching of the aggregation chip, to ensure transmission stability of the aggregation chip, and can also reduce a loss of the aggregation chip due to mode switching.

In a possible implementation, when switching the aggregation chip from the low-power mode to the high-speed transmission mode, the switching module is specifically configured to: determine whether the aggregation chip in the low-speed transmission mode is transmitting the low-speed signal; and if yes, switch the aggregation chip from the low-speed transmission mode to the high-speed transmission mode after the transmission is completed.

The foregoing setting can avoid adverse impact of mode switching on the transmission of the low-speed signal, such as data loss, to ensure data transmission integrity and reliability.

Optionally, in another possible implementation, in a mode switching process, if the aggregation chip is transmitting the low-speed signal in the low-speed transmission mode, the transmission of the low-speed signal may be stopped, and the switching module may directly switch the aggregation chip from the low-speed transmission mode to the high-speed transmission mode without waiting for the transmission of the low-speed signal to be completed. After switching to the high-speed transmission mode, the low-speed signal may be transmitted in the high-speed transmission mode. Through the foregoing setting, mode switching of the aggregation chip is more timely, so that the high-speed signal can be transmitted more quickly, to meet the transmission requirements for the high-speed signal, such as a low latency, high response sensitivity, and the like.

In a possible implementation, the low-power mode is a sleep mode. When the monitoring module detects a to-be-transmitted low-speed signal, the switching module is further configured to switch the aggregation chip from the sleep mode to the high-speed transmission mode. The aggregation chip is further configured to transmit the low-speed signal in the high-speed transmission mode.

In other words, regardless of whether the monitoring module detects a to-be-transmitted high-speed signal or low-speed signal, the switching module switches the aggregation chip from the sleep mode to the high-speed transmission mode, to transmit the high-speed signal or low-speed signal in the high-speed transmission mode. In this case, the monitoring module does not need to determine a class of a to-be-transmitted signal, and may wake up the aggregation chip for signal transmission provided that the to-be-transmitted signal is detected. The foregoing setting helps reduce a design requirement on the monitoring module, and can simplify switching logic of the aggregation chip, which is easy to implement.

In a possible implementation, the low-power mode is a sleep mode. When the monitoring module detects a to-be-transmitted low-speed signal but does not detect the high-speed signal, the switching module is further configured to switch the aggregation chip from the sleep mode to a low-speed transmission mode. Power consumption in the low-speed transmission mode is lower than that in the high-speed transmission mode and higher than that in the sleep mode. The aggregation chip is further configured to transmit the low-speed signal in the low-speed transmission mode.

In a possible implementation, when monitoring the to-be-transmitted signal of the aggregation chip, the monitoring module is specifically configured to: determine, by the monitoring module based on an instruction sent by a service module, that the to-be-transmitted high-speed signal is detected.

In a possible implementation, when switching the aggregation chip from the low-power mode to the high-speed transmission mode, the switching module is specifically configured to switch a clock scheme used by the aggregation chip from a low-speed clock to a high-speed clock.

In other words, the aggregation chip may work depending on (based on) the low-speed clock in the low-power mode, that is, use a low-speed clock scheme in the low-power mode; and the aggregation chip may work depending on (based on) the high-speed clock in the high-speed transmission mode, that is, use a high-speed clock scheme in the high-speed transmission mode. Switching between the low-power mode and the high-speed transmission mode is implemented by switching between the high-speed and low-speed clocks. This method is simple and easy to implement, and mode switching is more convenient and faster.

According to a second aspect, an electronic device is provided, including the control system for an aggregation chip provided in any one of the possible implementations of the first aspect.

Optionally, the electronic device may be any foldable electronic device such as a foldable mobile phone, or may be any other electronic device that is not foldable, such as a conventional bar-type mobile phone, a tablet computer, or a notebook computer. For example, the electronic device may be any one of the following three types of foldable mobile phones: vertical inward-foldable, horizontal inward-foldable, and horizontal outward-foldable.

According to a third aspect, a control method for an aggregation chip is provided, including: A monitoring module monitors a to-be-transmitted signal of an aggregation chip. A switching module switches the aggregation chip from a low-power mode to a high-speed transmission mode when the monitoring module detects a to-be-transmitted high-speed signal. Power consumption in the low-power mode is lower than that in the high-speed transmission mode. The aggregation chip transmits the high-speed signal in the high-speed transmission mode.

In a possible implementation, after the high-speed signal is transmitted, the method further includes: The switching module switches the aggregation chip from the high-speed transmission mode back to the low-power mode.

In a possible implementation, if the monitoring module does not detect a new high-speed signal within preset duration after the high-speed signal is transmitted, the method further includes: The switching module switches the aggregation chip from the high-speed transmission mode back to the low-power mode. If a new high-speed signal is detected within the preset duration, the method further includes: The aggregation chip transmits the new high-speed signal in the high-speed transmission mode.

In a possible implementation, the low-power mode is a low-speed transmission mode. When the monitoring module detects a to-be-transmitted low-speed signal, the method further includes: The aggregation chip transmits the low-speed signal in a current mode.

In a possible implementation, that the switching module switches the aggregation chip from the low-power mode to the high-speed transmission mode includes: The switching module determines whether the aggregation chip in the low-speed transmission mode is transmitting the low-speed signal; and if yes, switches the aggregation chip from the low-speed transmission mode to the high-speed transmission mode after the transmission is completed.

In a possible implementation, the low-power mode is a sleep mode. When the monitoring module detects a to-be-transmitted low-speed signal, the method further includes: The switching module switches the aggregation chip from the sleep mode to the high-speed transmission mode, to transmit the low-speed signal.

In a possible implementation, the low-power mode is a sleep mode. When the monitoring module detects a to-be-transmitted low-speed signal but does not detect the high-speed signal, the method further includes: The switching module switches the aggregation chip from the sleep mode to a low-speed transmission mode. Power consumption in the low-speed transmission mode is lower than that in the high-speed transmission mode and higher than that in the sleep mode. The aggregation chip transmits the low-speed signal in the low-speed transmission mode.

In a possible implementation, that the monitoring module monitors the to-be-transmitted signal of the aggregation chip includes: The monitoring module determines, based on an instruction sent by a service module, that the to-be-transmitted high-speed signal is detected.

In a possible implementation, that the switching module switches the aggregation chip from the low-power mode to the high-speed transmission mode includes: The switching module switches a clock scheme used by the aggregation chip from a low-speed clock to a high-speed clock.

According to a fourth aspect, a computer-readable storage medium is provided. The computer-readable storage medium stores a computer program. When the computer program is run on an electronic device, the electronic device is enabled to perform the method performed by the monitoring module, the switching module, or the aggregation chip provided in any one of the possible implementations of the third aspect.

According to a fifth aspect, a computer program product is provided, including computer program code. When the computer program code is run on an electronic device, the electronic device is enabled to perform the method performed by the monitoring module, the switching module, or the aggregation chip provided in any one of the possible implementations of the third aspect.

### BRIEF DESCRIPTION OF DRAWINGS

FIG. 1 is a diagram of structures of three different types of foldable mobile phones according to an embodiment of this application;
FIG. 2 is a three-dimensional view of structures of a horizontal outward-foldable mobile phone before and after folding according to an embodiment of this application;
FIG. 3 is a rear view of the foldable mobile phone shown in FIG. 2 with a cover removed in an unfolded state;
FIG. 4 is a block diagram of a signal transmission principle according to an embodiment of this application;
FIG. 5 shows an example of another application scenario of an aggregation chip according to an embodiment of this application;
FIG. 6 is a block diagram of a control system for an aggregation chip according to an embodiment of this application;
FIG. 7 is a sequence diagram of a current change when an aggregation chip includes a low-speed transmission mode and a high-speed transmission mode;
FIG. 8 is a sequence diagram of a current change when an aggregation chip includes a sleep mode and a high-speed transmission mode;
FIG. 9 is a sequence diagram of a current change when an aggregation chip includes a sleep mode, a low-speed transmission mode, and a high-speed transmission mode;
FIG. 10 is a flowchart of an example of a control method for an aggregation chip according to an embodiment of this application;
FIG. 11 is a flowchart of another example of a control method for an aggregation chip according to an embodiment of this application;
FIG. 12 is a flowchart of another example of a control method for an aggregation chip according to an embodiment of this application;
FIG. 13 is a flowchart of another example of a control method for an aggregation chip according to an embodiment of this application; and
FIG. 14A and FIG. 14B are a flowchart of another example of a control method for an aggregation chip according to an embodiment of this application.

### DESCRIPTION OF EMBODIMENTS

The following describes technical solutions of this application with reference to accompanying drawings. It is clear that the described embodiments are merely some but not all of embodiments of this application.

In the following description, for illustration instead of limitation, specific details such as a specific system structure and technology are provided, to thoroughly understand embodiments of this application. However, a person skilled in the art should understand that this application may also be implemented in other embodiments without these specific details. In other cases, detailed descriptions of a well-known system, apparatus, circuit, and method are omitted, so as not to obscure the description of this application with unnecessary details.

The term "include" in this specification indicates existence of a described feature, entirety, step, operation, element, and/or component, but does not exclude existence or addition of one or more other features, entireties, steps, operations, elements, components, and/or sets thereof. The terms "include", "comprise", "have", and their variants all mean "include but are not limited to", unless otherwise specifically emphasized in another manner.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more.

The term "and/or" in this specification merely describes an association relationship between associated objects, and represents that three relationships may exist. For example, A and/or B may represent the following three cases: Only A exists, both A and B exist, and only B exists. In addition, the character "/" in this specification generally indicates an "or" relationship between associated objects.

As terminal technologies continuously develop, a user has an increasingly high requirement for an electronic device that has a large size and is easy to carry. Therefore, a foldable electronic device having a flexible display has received widespread attention. The foldable electronic device may be unfolded when being used, to provide a larger display interface and improve visual effect; and folded when not being used, to facilitate storage and carrying by the user.

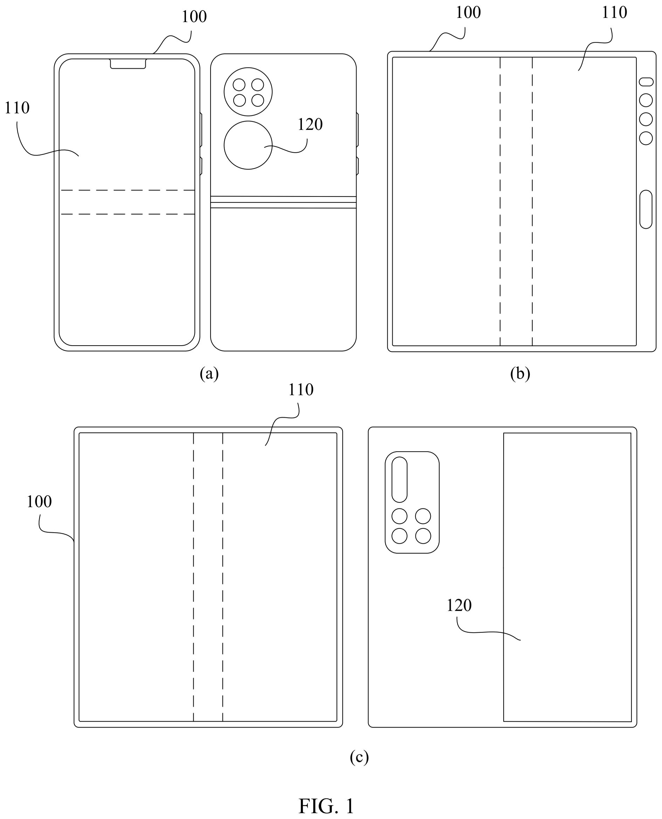

As a common foldable electronic device, a foldable mobile phone is gradually popularized in people's daily life. Foldable mobile phones may be classified by folding manner into three types: vertical inward-foldable, horizontal inward-foldable, and horizontal outward-foldable. FIG. 1 is a diagram of structures of three different types of foldable mobile phones 100 according to an embodiment of this application.

(a) in FIG. 1 shows a vertical inward-foldable mobile phone 100. As shown in (a) in FIG. 1, the foldable mobile phone 100 may have two displays: a flexible display 110 on a front side of the foldable mobile phone 100 and a back display 120 on a back side of the foldable mobile phone 100 and below a camera. The flexible display 110 is foldable, so that the foldable mobile phone 100 can be folded, for example, can be vertically folded inward (also referred to as a small-screen vertical foldable phone).

After folding, the flexible display 110 is on an inner side, and the back display 120 is on an outer side. Therefore, the flexible display 110 may also be referred to as an inner display, and the back display 120 may also be referred to as an outer display. When the foldable mobile phone 100 is unfolded, the foldable mobile phone 100 is similar to a common bar-type mobile phone. In this case, a user may perform human-machine interaction through the flexible display 110 having a large area, so that the user has good visual effect. When the foldable mobile phone 100 is folded, the user may perform human-machine interaction through the back display 120, which can meet a basic use requirement of the user, and facilitates storage and carrying of the foldable mobile phone 100 by the user.

(b) in FIG. 1 shows a horizontal outward-foldable mobile phone 100. As shown in (b) in FIG. 1, the foldable mobile phone 100 has a flexible display 110. The flexible display 110 is foldable, so that the foldable mobile phone 100 can be folded, for example, can be horizontally folded outward. After folding, the flexible display 110 is divided into a plurality of parts, for example, including a front display part facing a user, and a back display part opposite to the front display part and on a back side.

When the foldable mobile phone 100 is unfolded, the user may perform human-machine interaction through the complete flexible display 110, so that the user has good visual effect. When the foldable mobile phone 100 is folded, the user may perform human-machine interaction through the front display part of the flexible display 110, which can meet a basic use requirement of the user, and facilitates storage and carrying of the foldable mobile phone 100 by the user.

(c) in FIG. 1 shows a horizontal inward-foldable mobile phone 100. As shown in (c) in FIG. 1, the foldable mobile phone 100 may have two displays: a flexible display 110 on a front side of the foldable mobile phone 100 and a back display 120 on a back side of the foldable mobile phone 100. The flexible display 110 is foldable, so that the foldable mobile phone 100 can be folded, for example, can be horizontally folded inward. After folding, the flexible display 110 is on an inner side, and the back display 120 is on an outer side.

When the foldable mobile phone 100 is unfolded, a user may perform human-machine interaction through the flexible display 110 having a large area, so that the user has good visual effect. When the foldable mobile phone 100 is folded, the user may perform human-machine interaction through the back display 120, which can meet a basic use requirement of the user, and facilitates storage and carrying of the foldable mobile phone 100 by the user. On the back side of the foldable mobile phone 100, the back display 120 and a camera are arranged in parallel on left and right sides. In addition, the back display 120 is rectangular and close to an edge of the mobile phone. In this way, when folded, the foldable mobile phone 100 is similar to a conventional bar-type mobile phone and can be used as a conventional bar-type mobile phone.

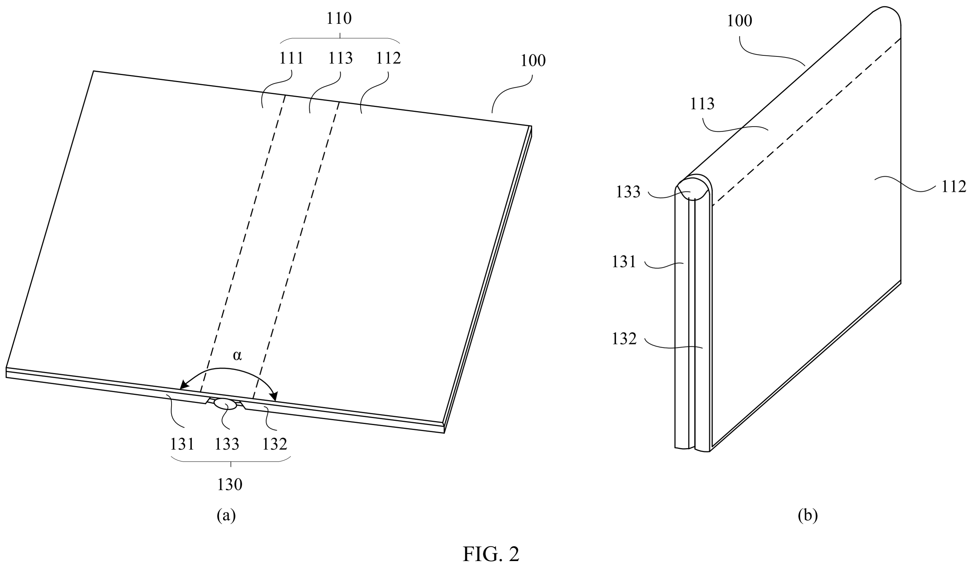

The following further describes a specific structure of the foldable mobile phone 100 by using the horizontal outward-foldable mobile phone 100 shown in (b) in FIG. 1 as an example. FIG. 2 is a three-dimensional view of structures of a horizontal outward-foldable mobile phone 100 before and after folding according to an embodiment of this application. (a) in FIG. 2 is a diagram of a structure of the foldable mobile phone 100 in an unfolded state. (b) in FIG. 2 is a diagram of a structure of the foldable mobile phone 100 in a folded state.

As shown in FIG. 2, the foldable mobile phone 100 includes a housing 130 and a flexible display 110. The housing 130 constructs an appearance of the foldable mobile phone 100. The housing 130 may be a metal housing, for example, a magnesium alloy, aluminum alloy, or stainless steel housing. Alternatively, the housing 130 may be a plastic housing, a glass housing, a ceramic housing, or the like, but is not limited thereto. The housing 130 usually includes a side frame, a middle frame, a back cover, and the like. A mounting cavity is provided inside the housing 130. Various electronic elements are mounted in the mounting cavity, for example, including a circuit board, a processor disposed on the circuit board, a battery, and various functional elements such as a camera, a flash, a microphone, and a speaker, but not limited thereto.

The foldable mobile phone 100 further includes the flexible display 110 disposed on the housing 130. The flexible display 110 is used as a front panel of the mobile phone, and forms the foregoing mounting cavity with the housing 130. The flexible display 110 forms a display surface of the foldable mobile phone 100, and is configured to display information such as an image and text, and provide information exchange. The flexible display 110 is flexible and bendable. For example, the flexible display 110 may be an organic light-emitting diode (organic light-emitting diode, OLED) display, an active-matrix organic light-emitting diode (active-matrix organic light-emitting diode, AMOLED) display, a mini light-emitting diode (mini organic light-emitting diode) display, a micro light-emitting diode (micro organic light-emitting diode) display, a micro organic light-emitting diode (micro organic light-emitting diode) display, a quantum dot light-emitting diode (quantum dot light-emitting diode, QLED) display, or the like, but is not limited thereto.

As shown in FIG. 2, the housing 130 is composed of a plurality of parts, including a first housing 131, a folding mechanism 133, and a second housing 132 that are sequentially connected. The folding mechanism 133 is deformable to enable the first housing 131 and the second housing 132 to be unfolded or folded relative to each other. The flexible display 110 includes a first non-bendable part 111, a bendable part 113, and a second non-bendable part 112 that are sequentially connected. The first housing 131 is fastened to the first non-bendable part 111. The second housing 132 is fastened to the second non-bendable part 112. The folding mechanism 133 directly faces the bendable part 113.

As shown in (a) in FIG. 2, the first housing 131 and the second housing 132 can be unfolded relative to each other to be completely unfolded, so that the foldable mobile phone 100 is in the unfolded state. When the first housing 131 and the second housing 132 are completely unfolded, an included angle α between them may be approximately 180° (a small deviation is also allowed, for example, 165°, 177°, or 185°).

As shown in (b) in FIG. 2, the first housing 131 and the second housing 132 can be folded relative to each other to be completely folded, so that the foldable mobile phone 100 is in the folded state. In this case, the first housing 131 and the second housing 132 are parallel to each other (a small deviation is also allowed). In other words, the foldable mobile phone 100 may switch between the unfolded state and the folded state through deformation of the folding mechanism 133. In some embodiments, the foldable mobile phone 100 may alternatively utilize deformation of the folding mechanism 133 to enable the first housing 131 and the second housing 132 to be unfolded/folded relative to each other until the foldable mobile phone 100 is in a partially unfolded state. In other words, the first housing 131 and the second housing 132 are in an intermediate state between a completely unfolded state and a completely folded state. For example, when the first housing 131 and the second housing 132 are completely unfolded, the included angle α between them may alternatively be approximately an obtuse angle such as 120°, 135°, or 150°. This is not strictly limited in this application.

In embodiments of this application, the flexible display 110 can be bent along with the housing 130. When the foldable mobile phone 100 is in the unfolded state shown in (a) in FIG. 2, the flexible display 110 is flat and supports full-screen display, so that the foldable mobile phone 100 has a large display area, to improve viewing experience of a user. When the foldable mobile phone 100 is in the folded state shown in (b) in FIG. 2, the flexible display 110 is folded on an outer side of the housing 130, and a planar size of the foldable mobile phone 100 is reduced, to facilitate carrying and storage by the user.

The folding mechanism 133 includes but is not limited to one or more of a rotating shaft, a gear, a hinge, a sliding block, a sliding groove, a pin shaft, a connecting rod, a sliding rod, a swing rod, or the like. In addition, the folding mechanism 133 may be made of an elastic material, a memory alloy material, or the like.

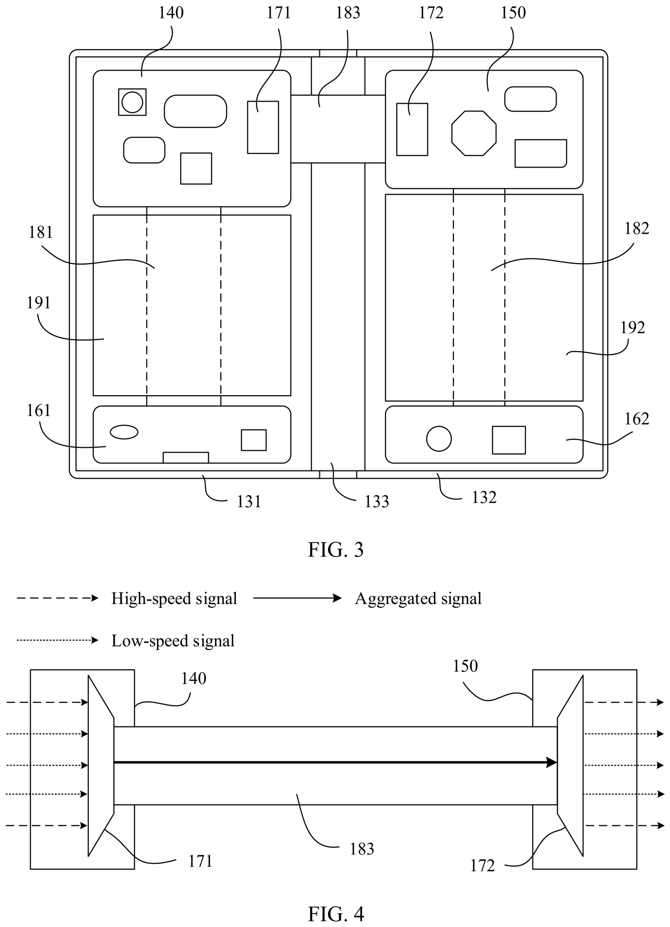

The following continues to briefly describe an internal structure of the foldable mobile phone 100. FIG. 3 is a rear view of the foldable mobile phone 100 shown in FIG. 2 with a cover removed in an unfolded state. As shown in FIG. 3, various components such as a circuit board and a battery are disposed in the mounting cavity inside the foldable mobile phone 100. Specifically, a primary board 140, a first battery 191, and a first sub-board 161 are disposed in the first housing 131. The primary board 140, the first battery 191, and the first sub-board 161 are sequentially stacked from top to bottom to form a conventional three-segment design architecture. The primary board 140 is electrically connected to the first sub-board 161 through a first flexible printed circuit (flexible printed circuit, FPC) 181. The first flexible printed circuit 181 is sandwiched between the first battery 191 and the foldable middle frame.

Similarly, a secondary board 150, a second battery 192, and a second sub-board 162 are disposed in the second housing 132. The secondary board 150, the second battery 192, and the second sub-board 162 are sequentially stacked from top to bottom to form a conventional three-segment design architecture. The secondary board 150 is electrically connected to the second sub-board 162 through a second flexible printed circuit 182. The second flexible printed circuit 182 is sandwiched between the second battery 192 and the foldable middle frame.

The primary board 140 is connected to the secondary board 150 through a third flexible printed circuit 183, to implement signal transmission between the primary board 140 and the secondary board 150. A memory and various processors are mounted on the primary board 140, for example, including an application processor (application processor, AP), a central processing unit (central processing unit, CPU), a graphics processing unit (graphics processing unit, GPU), an image signal processor (image signal processor, ISP), a modem peripheral subsystem (modem peripheral subsystem, MPSS), a sensor low power island (sensor low power island, SLPI), or the like, but not limited thereto. Various functional elements are mounted on (connected to) the secondary board 150, the first sub-board 161, and the second sub-board 162, for example, including a touch panel (touch panel, TP), a charging interface, a subscriber identity module (subscriber identity module, SIM) card interface, a camera module, a fingerprint recognition module, a speaker, a microphone, or the like, but not limited thereto.

The primary board 140 is respectively connected to the first sub-board 161 and the secondary board 150 through the first flexible printed circuit 181 and the third flexible printed circuit 183, and the secondary board 150 is connected to the second sub-board 162 through the second flexible printed circuit 182, to implement signal transmission (for example, digital signal transmission) between the processor on the primary board 140 and each functional element on the first sub-board 161, the secondary board 150, and the second sub-board 162, thereby implementing a corresponding function of the functional element.

For example, as shown in FIG. 3, a digital signal is transmitted between the primary board 140 and the secondary board 150 through the third flexible printed circuit 183. A digital signal generated by the processor on the primary board 140 may be transmitted, through the third flexible printed circuit 183, to the functional element mounted on or connected to the secondary board 150, to control the functional element, so that the functional element can implement the corresponding function. Because the third flexible printed circuit 183 needs to penetrate the folding mechanism 133 to implement signal transmission between the primary board 140 and the secondary board 150, and the folding mechanism 133 usually includes a rotating shaft, the third flexible printed circuit 183 is also generally referred to as a through-shaft FPC.

As shown in FIG. 3, an aggregation chip 171 is disposed on the primary board 140, and a decomposition chip 172 is disposed on the secondary board 150. The aggregation chip 171 is configured to aggregate (also generally referred to as multiplex, converge, or combine) a plurality of digital signals to be transmitted by the primary board 140 to the secondary board 150, and then send an aggregated digital signal to the decomposition chip 172 through the third flexible printed circuit 183. The decomposition chip 172 is configured to decompose (also generally referred to as demultiplex, recover, restore, or split) the aggregated digital signal from the aggregation chip 171, and then output the digital signals to related functional elements on the secondary board 150.

Disposing the aggregation chip 171 and the decomposition chip 172 used in conjunction enables the plurality of digital signals to be combined and transmitted on one physical channel. This can reduce a quantity of physical channels needed for signal transmission, to effectively reduce a size of the third flexible printed circuit 183. The reduction in the size of the third flexible printed circuit 183 expands layout space of another component inside the mobile phone, to reduce difficulty in structure design (for example, folding design) and layout inside the foldable mobile phone 100, and facilitate product miniaturization, lightweight, and thinning.

FIG. 4 is a block diagram of a signal transmission principle according to an embodiment of this application. As shown in FIG. 4, when a plurality of digital signals on the primary board 140 need to be transmitted to the secondary board 150, the aggregation chip 171 can aggregate the plurality of digital signals according to preset logic, such as aggregating the plurality of digital signals into one signal and then transmitting it to the decomposition chip 172 through a physical channel on the third flexible printed circuit 183. The decomposition chip 172 restores the plurality of digital signals through decomposition according to corresponding logic and distributes the signals to signal receivers. The signal receivers may be, for example, (circuits of) functional elements on the secondary board 150 or the second sub-board 162.

In a possible implementation, the decomposition chip 172 can also aggregate a plurality of digital signals, and the aggregation chip 171 can also decompose an aggregated digital signal from the decomposition chip 172. In this way, the third flexible printed circuit 183 can also combine the plurality of digital signals through a multi-path aggregation technology for transmission on one physical channel in a transmission direction from the secondary board 150 to the primary board 140, to further reduce the size of the third flexible printed circuit 183 and facilitate the structure design inside the mobile phone.

In this case, because both the aggregation chip 171 and the decomposition chip 172 have signal aggregation and signal decomposition functions, their structures may be the same. In some cases, both of them may be referred to as aggregation chips. For example, the aggregation chip 171 is referred to as a first aggregation chip, and the decomposition chip 172 is referred to as a second aggregation chip.

The foregoing signal aggregation and transmission solution related to the aggregation chip 171 may be applied to various foldable devices, for example, may be applied to the following three types of foldable mobile phones 100 shown in FIG. 1: vertical inward-foldable, horizontal inward-foldable, and horizontal outward-foldable. For example, according to the signal aggregation and transmission solution, signals of up to 60+ pins can be transmitted through only four physical channels, to greatly facilitate design of the folding mechanism 133, and help improve structural stability and structural strength of the foldable device.

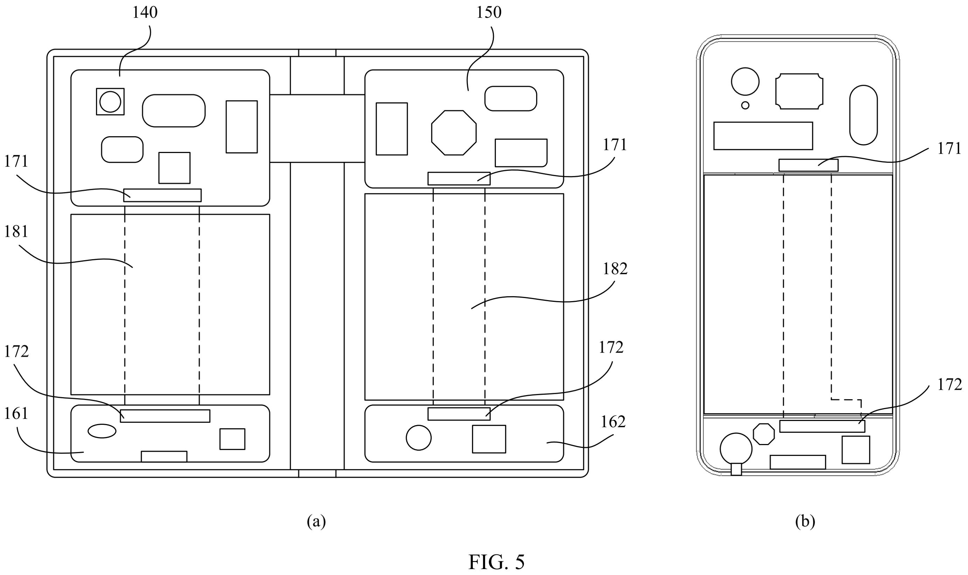

FIG. 5 shows an example of another application scenario of the aggregation chip 171 according to an embodiment of this application. As shown in (a) in FIG. 5, the aggregation chip 171 and the decomposition chip 172 can alternatively be configured to implement signal aggregation and transmission between the primary board 140 and the first sub-board 161. Specifically, the aggregation chip 171 is disposed on the primary board 140, and the decomposition chip 172 is disposed on the first sub-board 161. The aggregation chip 171 is configured to aggregate a plurality of digital signals to be transmitted by the primary board 140 to the first sub-board 161, and then send an aggregated digital signal to the decomposition chip 172 through the first flexible printed circuit 181. The decomposition chip 172 is configured to decompose the aggregated digital signal from the aggregation chip 171 to restore the digital signals, and then output the digital signals to related functional elements on the first sub-board 161. The foregoing setting can reduce a size of the first flexible printed circuit 181.

As shown in (a) in FIG. 5, the aggregation chip 171 and the decomposition chip 172 can alternatively be configured to implement signal aggregation and transmission between the secondary board 150 and the second sub-board 162. Specifically, the aggregation chip 171 is disposed on the secondary board 150, and the decomposition chip 172 is disposed on the second sub-board 162. The aggregation chip 171 is configured to aggregate a plurality of digital signals to be transmitted by the secondary board 150 to the second sub-board 162, and then send an aggregated digital signal to the decomposition chip 172 through the second flexible printed circuit 182. The decomposition chip 172 is configured to decompose the aggregated digital signal from the aggregation chip 171 to restore the digital signals, and then output the digital signals to related functional elements on the second sub-board 162. The foregoing setting can reduce a size of the second flexible printed circuit 182.

The foregoing signal aggregation and transmission solution related to the aggregation chip 171 may be further applied to a non-foldable device, for example, may be applied to any electronic device such as a conventional mobile phone (bar-type mobile phone), a tablet computer, or a notebook computer. A specific application scenario of the aggregation chip 171 is not limited in this application. As shown in (b) in FIG. 5, the aggregation chip 171 and the decomposition chip 172 can alternatively be configured to implement signal aggregation and transmission between a mainboard and a sub-board of a conventional mobile phone. The foregoing setting can reduce a size of a flexible printed circuit connecting the mainboard and the sub-board. In this case, a battery with a larger size can be disposed, to increase a capacity of the battery and help enhance battery endurance of a mobile terminal.

As shown in FIG. 4, digital signals transmitted between the primary board 140 and the secondary board 150 through the third flexible printed circuit 183 may include both a high-speed signal and a low-speed signal. Digital signals usually include a high-speed signal and a low-speed signal. Whether a signal is a high-speed signal or a low-speed signal depends not only on its frequency, but also on a length of its transmission path. Generally, if the length of the signal's transmission path (namely, a length of a signal line) is less than 1/6 of an effective wavelength of the signal, or if a trace length of the signal is less than 1/6 of an effective length of the signal, it may be considered that level states at all points on the transmission path are approximately the same, and the signal is a low-speed signal. Otherwise, the signal is a high-speed signal.

Another possible determining criterion is as follows: If a rise time of a signal's edge is less than or equal to 4 to 6 times a transmission latency of the signal, the signal is considered as a high-speed signal. Otherwise, the signal is considered as a low-speed signal.

Still another possible determining criterion is as follows: A signal whose transmission rate is lower than a threshold (for example, 200 Mbps) may be considered as a low-speed signal according to a specific chip constraint.

A person skilled in the art can determine which signals are high-speed signals and which signals are low-speed signals with reference to a specific application scenario. Table 1 shows an example of some digital signals transmitted between the primary board 140 and the secondary board 150 in the foldable mobile phone 100. It can be learned from Table 1 that high-speed signals transmitted between the primary board 140 and the secondary board 150 include signals related to modules such as SIM/SD, TP, I2C, and RFFE, and low-speed signals include a GPIO signal, an SPI signal, and the like.

**Table 1: Example of digital signals transmitted between the primary board 140 and the secondary board 150**

| No. | Signal class | Module | Network name |
|---|---|---|---|
| 1 | High-speed signal | SIM/SD | USIM0_DATA |
| 2 | | | USIM0_CLK |
| 3 | | | USIM0_RST_N |
| 4 | | | NFC_SWIO_UIM0 |
| 5 | | | SDC_SIM_CLK_SUB_CON |
| 6 | | | SDC_CMD |
| 7 | | | SDC_DATAO_SIM_RST |
| 8 | | | SDC_DATA1_SIM_DATA |
| 9 | | | SDC_DATA2 |
| 10 | | | SDC_DATA3 |
| 11 | | TP | TP_SPI0_MISO |
| 12 | | | TP_SPI0_MOSI |
| 13 | | | TP_SPI0_CLK |
| 14 | | | TP_SPI0_CS0_N |
| 15 | | I2C | I2C7_SCL |
| 16 | | | I2C7_SDA |
| 17 | | | I3C2_SCL |
| 18 | | | I3C2_SDA |
| 19 | | RFFE | FE5_MIPI_CLK |
| 20 | | | FE5_MIPI_DATA |
| 21 | Low-speed signal | GPIO | GPIO_198_SDLDO_MOS_EN |
| 22 | | | GPIO_234_SDC_DET_CON |
| 23 | | | GPIO1_xxx_btb |
| 24 | | | GPIO_039_BTB_WDET |
| 25 | | | GPIO_039_SIM_WDET |
| 26 | | | GPIO_015_FUG_INT |
| 27 | | | GPIO_101_VBAT_SENSE_SW |
| 28 | | | GPIO_014_ELVDD_DET |
| 29 | | | GPIO_232_LCD_DIG_1V2_EN |
| 30 | | | GPIO_184_LCD_IOVDD_EN |
| 31 | | | GPIO_170_SCHG_SC3_INT_N |
| 32 | | | GPIO_200_HALL_INT2_N |
| 33 | | | GPIO_231_AG_INT |
| 34 | | | GPIO_068_LCD_ID0 |
| 35 | | | GPIO_069_LCD_ID1 |
| 36 | | | GPIO_178_TP_1NT2_N |
| 37 | | | GPIO_178_TP_INT1_N |
| 38 | | | GPIO_183_TP_RST_N |
| 39 | | | GPIO_003_LCD_TE0 |
| 40 | | | GPIO_060_LCD_RST_N |

States of a system of the foldable mobile phone 100 during operation may be classified into a service state and a sleep state. In the service state, the system is in a high-speed clock state. In the sleep state, the system is in a low-speed clock state. In the related technology, the aggregation chip 171 is in a working state as long as the system of the foldable mobile phone 100 is in the high-speed clock state. That is, the aggregation chip 171 is kept in a power-on working state as long as the system of the foldable mobile phone 100 is in the service state. However, a percentage of duration of signal transmission by the aggregation chip 171 in total duration of being in the working state is very low (less than 0.5%). Consequently, the aggregation chip 171 operates without loads for a large amount of time.

In addition, to meet transmission requirements for high-speed signals, such as a high rate, a low latency, and high response sensitivity, the aggregation chip 171 is usually designed according to maximum application specifications. The aggregation chip 171 is always kept in a high-speed transmission mode with high power consumption. The high-speed transmission mode follows the system's use of a high-speed clock scheme for signal transmission. However, it can be learned by parsing to-be-transmitted signals of the aggregation chip 171 that high-speed signals account for an very small part of the to-be-transmitted signals of the aggregation chip 171. Most of the time, the to-be-transmitted signals of the aggregation chip 171 may include only low-speed signals. Low-speed transmission by the aggregation chip 171 is sufficient to meet requirements for the low-speed signals. The foregoing two factors result in unnecessary power waste of the aggregation chip 171, reducing battery endurance of an electronic device.

In view of this, embodiments of this application first provide a control system for an aggregation chip. The control system can be used in an electronic device. The control system enables the aggregation chip to operate in a low-power mode. The low-power mode may be, for example, a sleep (sleep) mode or a low-speed transmission mode specially used to transmit low-speed signals. This effectively resolves a problem of unnecessary power waste of the aggregation chip, to enhance battery endurance of the electronic device.

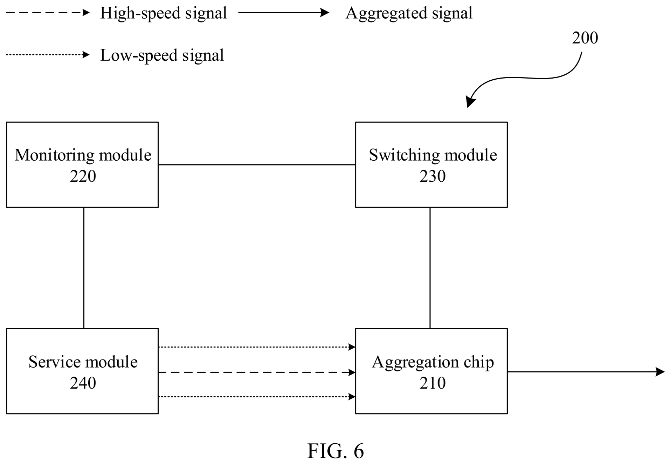

FIG. 6 is a block diagram of a control system 200 for an aggregation chip according to an embodiment of this application. The control system 200 provided in embodiments of this application may be used in any foldable electronic device such as a foldable mobile phone, or may be used in any other electronic device that is not foldable, such as a conventional bar-type mobile phone, a tablet computer, or a notebook computer. For example, the control system 200 may be used in any type of foldable mobile phone shown in FIG. 1, or may be used in a conventional bar-type mobile phone shown in FIG. 5. As shown in FIG. 6, the control system 200 provided in embodiments of this application includes an aggregation chip 210, a monitoring module 220, and a switching module 230.

The aggregation chip 210 is configured to aggregate to-be-transmitted signals for transmission. For example, the aggregation chip 210 may be the foregoing aggregation chip 171. In embodiments of this application, the aggregation chip 210 has a plurality of modes. The plurality of modes include at least a low-power mode and a high-speed transmission mode. Power consumption in the low-power mode is lower than that in the high-speed transmission mode. For example, a current/voltage on the aggregation chip 210 is lower in the low-power mode. The low-power mode may be, for example, a sleep mode or a low-speed transmission mode specially used to transmit low-speed signals. The high-speed transmission mode can be used to transmit high-speed signals, and can meet transmission requirements for the high-speed signals, such as a high rate, a low latency, and high response sensitivity.

A power of (the current/voltage on) the aggregation chip 210 in the low-power mode is lower than that of the aggregation chip 210 in the high-speed transmission mode. When the aggregation chip 210 operates in the low-power mode, the aggregation chip 210 consumes less battery power. This can avoid power waste of the chip. Therefore, in some cases, the low-power mode may be a default mode of the aggregation chip 210. When no high-speed signal needs to be transmitted, the aggregation chip 210 may be kept in the low-power mode by default (automatically).

It should be noted that regardless of whether the aggregation chip 210 is in the low-power mode or the high-speed transmission mode, the aggregation chip 210 is in a power-on state. In other words, the chip is not powered off regardless of which one of the foregoing two modes is used. In this case, whether the aggregation chip 210 is powered on can be decoupled from a status of a system of an electronic device. For example, the aggregation chip 210 is not powered off regardless of whether the system is in a working state or a sleep state. This can avoid frequent and/or rapid power-on and power-off of the chip, ensure good transmission stability of the aggregation chip 210, and reduce a loss of the aggregation chip 210 due to mode switching.

In the description of this application, the to-be-transmitted signals are signals that need to be aggregated by the aggregation chip 210 for transmission, are signals to be transmitted by the aggregation chip 210, and do not include a signal being transmitted by the aggregation chip 210. As shown in FIG. 6, the to-be-transmitted signals may include a low-speed signal and/or a high-speed signal. The aggregation chip 210 can first aggregate the to-be-transmitted signals, and then send an aggregated signal to a decomposition chip at a peer end through a flexible printed circuit. For a specific process, refer to the foregoing related description. Details are not described herein again.

As shown in FIG. 6, in embodiments of this application, the control system 200 is used in an electronic device, and the to-be-transmitted signals may come from a service module 240 of the electronic device. The electronic device has a plurality of service modules. In some cases, some service modules (for example, the service module 240 in FIG. 6) need to implement their own services through signal aggregation and transmission by the aggregation chip 210. For example, the service module 240 in FIG. 6 may be a TP module. The aggregation chip 210 needs to transmit, to a TP at the peer end, a high-speed signal generated by an AP. The TP completes its own service based on the high-speed signal transmitted by the aggregation chip 210. In addition, the service module 240 may alternatively be a SIM card module or a camera module. In this case, the aggregation chip 210 can aggregate high-speed signals related to a SIM card and a camera for transmission.

The service module 240 may include a processor that can generate a digital signal (for example, a low-speed signal and/or a high-speed signal). The processor is connected to the aggregation chip 210, and can send the generated digital signal to the aggregation chip 210. Different service modules 240 may correspond to different processors. The processor in embodiments of this application may be, for example, an AP, an MPSS, an SLPI, or the like, but is not limited thereto. The aggregation chip 210 can aggregate signals from a plurality of signal sources for transmission. Therefore, the service module 240 in FIG. 6 may also be considered as a set of (processors of) a plurality of service modules, or the service module 240 may also be considered as a set of a plurality of processors and/or processing modules.

With reference to Table 1 above, in embodiments of this application, the high-speed signal may include signals related to modules such as SIM/SD, TP, I2C, and RFFE, or the high-speed signal may include a signal from the AP, the MPSS, the SLPI, or the like. The low-speed signal includes a GPIO signal, an SPI signal, a UART serial port signal, or the like, but is not limited thereto.

In some cases, the to-be-transmitted signal may alternatively be obtained by converting another signal such as an analog signal. The analog signal may be generated by, for example, a component such as a sensor disposed inside the electronic device. In this case, the electronic device may further include a corresponding converter, which may be, for example, an analog-to-digital converter (analog to digital converter, ADC).

In some other cases, the to-be-transmitted signal may alternatively come from outside the electronic device. In other words, a signal source of the to-be-transmitted signal does not belong to the electronic device. For example, the to-be-transmitted signal is obtained by the electronic device from another device through wired or wireless communication.

The monitoring module 220 is connected to the aggregation chip 210 and configured to monitor a to-be-transmitted signal of the aggregation chip 210. For example, the monitoring module 220 may monitor whether the aggregation chip 210 has a to-be-transmitted signal, and whether the to-be-transmitted signal includes a high-speed signal or a low-speed signal if there is the to-be-transmitted signal. For example, the monitoring module 220 can monitor whether the aggregation chip 210 has a to-be-transmitted high-speed signal.

In a possible monitoring manner, the monitoring module 220 is connected to the service module 240, and the service module 240 may be preconfigured. When a high-speed signal needs to be transmitted, the service module 240 may send an instruction or information (for example, a voting instruction) to the monitoring module 220. The monitoring module 220 receives the instruction and determines, based on the instruction, that the aggregation chip 210 has a to-be-transmitted high-speed signal.

For example, the monitoring module 220 may include an I3C interface module. The service module 240 may send an instruction to the interface module through an I3C bus. After receiving the instruction, the monitoring module 220 can determine, based on the instruction, that there is a to-be-transmitted high-speed signal. The I3C interface module may be disposed on the aggregation chip 210. In this case, the monitoring module 220 may be considered as a part of the aggregation chip 210.

In another possible monitoring manner, the monitoring module 220 may monitor a buffer of the aggregation chip 210 to determine whether there is a to-be-transmitted signal. The buffer may be, for example, a first in first out (first input first output, FIFO) buffer.

For example, when a signal (data) exists in the buffer, the aggregation chip 210 has a to-be-transmitted signal. When the buffer is empty, the aggregation chip 210 has no to-be-transmitted signal.

Further, when a signal exists in the buffer, the signal in the buffer may be parsed, such as reading and identifying a related field in a data header, to determine whether the signal is a high-speed signal or a low-speed signal.

In another possible monitoring manner, the control system 200 is used in the electronic device, and signals aggregated by the aggregation chip 210 for transmission may be related to only a few service modules such as the TP module. In consideration of a specific application scenario, the monitoring module 220 may perform scenario identification to determine whether there is a to-be-transmitted signal and whether there is a to-be-transmitted high-speed signal. In some cases, the monitoring module 220 may determine whether there is a to-be-transmitted high-speed signal by identifying whether a processor and/or a functional element corresponding to a related service module are/is powered on. For example, when the monitoring module 220 detects that the TP is currently in a power-on working state, the AP generates a high-speed signal related to the TP, so that it can be determined that there is currently a to-be-transmitted high-speed signal.

The switching module 230 is communicatively connected to the monitoring module 220 and the aggregation chip 210. The switching module 230 is configured to switch the aggregation chip 210 from the low-power mode to the high-speed transmission mode when the monitoring module 220 detects a to-be-transmitted high-speed signal, so that the aggregation chip 210 can transmit the high-speed signal in the high-speed transmission mode. In some cases, the switching module 230 may also be considered as a part of the aggregation chip 210.

Specifically, as a trigger condition for mode switching, when the monitoring module 220 detects the to-be-transmitted high-speed signal, the switching module 230 automatically initiates a mode switching procedure for the aggregation chip 210, to switch the aggregation chip 210 from the current low-power mode to the high-speed transmission mode. The aggregation chip 210 can transmit the high-speed signal in the high-speed transmission mode, to meet transmission requirements for the high-speed signal, such as a high rate, a low latency, and high response sensitivity.

In a possible implementation, when detecting that the to-be-transmitted signal includes a high-speed signal, the monitoring module 220 may send a trigger instruction to the switching module 230. After receiving the trigger instruction, the switching module 230 triggers a mode switching procedure for the aggregation chip 210 based on the trigger instruction, for example, may send a switching instruction to the aggregation chip 210. The aggregation chip 210 performs mode switching based on the switching instruction.

Optionally, mode switching of the aggregation chip 210 may be implemented by accessing (reading/writing) a register of the aggregation chip 210. For example, the switching module 230 may rewrite or update a configuration parameter or a status parameter of the aggregation chip 210 recorded in the register, to switch the aggregation chip 210 from the low-power mode to the high-speed transmission mode.

Rewriting the configuration parameter of the aggregation chip 210 may include rewriting clock status information of the aggregation chip 210. For example, a clock scheme used by the aggregation chip 210 may be switched from a low-speed clock to a high-speed clock. In other words, the aggregation chip 210 may work depending on (based on) the low-speed clock in the low-power mode, that is, use a low-speed clock scheme in the low-power mode; and the aggregation chip 210 may work depending on (based on) the high-speed clock in the high-speed transmission mode, that is, use a high-speed clock scheme in the high-speed transmission mode. Switching between the low-power mode and the high-speed transmission mode is implemented by switching between the high-speed and low-speed clocks. This method is simple and easy to implement, and mode switching is more convenient and faster.

The low-speed clock and the high-speed clock may be provided by a crystal oscillator (crystal oscillator) in the electronic device. The crystal oscillator can be controlled to output a low-speed clock signal or a high-speed clock signal by changing a frequency.

According to the control system 200 for an aggregation chip provided in embodiments of this application, the aggregation chip 210 includes the low-power mode and the high-speed transmission mode. When the monitoring module 220 detects the to-be-transmitted high-speed signal, the switching module 230 can switch the aggregation chip 210 from the current low-power mode to the high-speed transmission mode, so that the aggregation chip 210 can transmit the high-speed signal in the high-speed transmission mode, to meet transmission requirements for the high-speed signal, such as a high rate, a low latency, and the like. When there is no to-be-transmitted high-speed signal, the aggregation chip 210 may operate in the low-power mode. For example, the low-power mode may be a default mode of the aggregation chip 210. The power consumption in the low-power mode is lower than that in the high-speed transmission mode. This can avoid power waste.

According to the control system 200 for an aggregation chip provided in embodiments of this application, because the aggregation chip 210 has a plurality of modes, an appropriate mode may be selected for the aggregation chip 210 based on a specific service requirement. The aggregation chip 210 is switched to the high-speed transmission mode with high power consumption only when the to-be-transmitted high-speed signal is detected, and may operate in the low-power mode when no high-speed signal needs to be transmitted. In comparison with the conventional technology in which the aggregation chip always operates in the high-speed transmission mode, in this application, power consumption can be allocated based on an actual service requirement. This can avoid unnecessary power waste of the aggregation chip 210, to enhance battery endurance of the electronic device. In addition, the aggregation chip 210 in this application does not need to always operate in the high-speed transmission mode. This can reduce a loss of the aggregation chip 210, to prolong a service life of the aggregation chip 210.

Further, in embodiments of this application, after the high-speed signal is transmitted, the switching module 230 is further configured to switch the aggregation chip 210 from the high-speed transmission mode back to the low-power mode.

In other words, after the high-speed signal is transmitted, the switching module 230 can automatically switch the aggregation chip 210 from the high-speed transmission mode back to the low-power mode. The low-power mode may be used as a default mode of the aggregation chip 210, so that the aggregation chip 210 can maximally operate in the low-power mode, to avoid unnecessary power waste of the aggregation chip 210 to a maximum extent, and prolong a battery life of the electronic device.

Optionally, after determining that the high-speed signal is transmitted, the switching module 230 may immediately switch the aggregation chip 210 from the high-speed transmission mode back to the low-power mode, to enable the aggregation chip 210 to maximally operate in the low-power mode.

Optionally, it may be determined based on an instruction from the service module 240 that the high-speed signal is transmitted.

In embodiments of this application, if the monitoring module 220 does not detect, within preset duration after the high-speed signal is transmitted, that a new high-speed signal needs to be transmitted, the switching module 230 is further configured to switch the aggregation chip 210 from the high-speed transmission mode back to the low-power mode. If the monitoring module 220 detects, within the preset duration after the high-speed signal is transmitted, that a new high-speed signal needs to be transmitted, the aggregation chip 210 is further configured to transmit the new high-speed signal in the high-speed transmission mode.

In other words, after the high-speed signal is transmitted, the chip is not directly switched to the low-power mode, but waits for the preset duration, that is, remains idle (idle) for the preset duration in the high-speed transmission mode. If the monitoring module 220 detects, within the preset duration, that a new high-speed signal needs to be transmitted, the aggregation chip 210 directly transmits the new high-speed signal in the current high-speed transmission mode. If the monitoring module 220 does not detect, within the preset duration, that a new high-speed signal needs to be transmitted, the switching module 230 switches the aggregation chip 210 from the high-speed transmission mode back to the low-power mode.

The foregoing setting can avoid frequent mode switching of the aggregation chip 210, to ensure transmission stability of the aggregation chip 210, and can also reduce a loss of the aggregation chip 210 due to mode switching. In addition, for some continuous services, a high-speed signal may be continually sent a plurality of times in a period of time. Setting preset idle duration of the aggregation chip 210 in the high-speed mode enables a subsequent new high-speed signal to be transmitted quickly and in time after arrival. A response speed is fast, to avoid a transmission lag due to mode switching.

Optionally, the preset duration may be, for example, 1 second, 2 seconds, 5 seconds, or 10 seconds. After it is determined that the high-speed signal is transmitted, a timer may be started. If the monitoring module 220 does not detect a new high-speed signal within the preset duration after the timer is started, the switching module 230 switches the aggregation chip 210 from the high-speed transmission mode back to the low-power mode. If a new high-speed signal is detected, the aggregation chip 210 directly transmits the new high-speed signal in the current high-speed transmission mode, the timer is reset, and timing restarts. The switching module 230 switches the aggregation chip 210 from the high-speed transmission mode back to the low-power mode only when no new high-speed signal is detected in a subsequent period of the preset duration.

In embodiments of this application, the aggregation chip 210 has a plurality of working modes including the low-power mode and the high-speed transmission mode. For example, the aggregation chip 210 may have two, three, or more working modes. The low-power mode may be, for example, the low-speed transmission mode used to transmit low-speed signals, or the sleep mode. In some cases, the low-power mode may be any mode with lower power consumption than the high-speed transmission mode. Embodiments of this application provide the following three types of aggregation chips 210: (1) The aggregation chip 210 includes the low-speed transmission mode and the high-speed transmission mode. (2) The aggregation chip 210 includes the sleep mode and the high-speed transmission mode. (3) The aggregation chip 210 includes the sleep mode, the low-speed transmission mode, and the high-speed transmission mode. The following separately describes the three types of aggregation chips 210 with reference to the accompanying drawings.

### (1) The aggregation chip 210 includes the low-speed transmission mode and the high-speed transmission mode.

In this implementation, the aggregation chip 210 may include two modes: the low-speed transmission mode and the high-speed transmission mode. The low-speed transmission mode is used to transmit only low-speed signals. The high-speed transmission mode can be used to transmit not only high-speed signals, but also low-speed signals. Power consumption in the low-speed transmission mode is lower than that in the high-speed transmission mode. The low-speed transmission mode is used as the default mode of the aggregation chip 210.

Optionally, the aggregation chip 210 may work depending on (based on) the low-speed clock in the low-speed transmission mode, that is, use the low-speed clock scheme in the low-speed transmission mode; and the aggregation chip 210 may work depending on (based on) the high-speed clock in the high-speed transmission mode, that is, use the high-speed clock scheme in the high-speed transmission mode. Mode switching of the aggregation chip 210 may be switching between the high-speed and low-speed clocks. For example, when the aggregation chip 210 is switched from the low-speed transmission mode to the high-speed transmission mode, the clock scheme used by the aggregation chip 210 may be switched from the low-speed clock to the high-speed clock; and when the aggregation chip 210 is switched from the high-speed transmission mode to the low-speed transmission mode, the clock scheme used by the aggregation chip 210 may be switched from the high-speed clock to the low-speed clock.

When the monitoring module 220 detects the to-be-transmitted high-speed signal, the switching module 230 switches the aggregation chip 210 from the low-speed transmission mode to the high-speed transmission mode, and the aggregation chip 210 transmits the high-speed signal in the high-speed transmission mode (there is no need for mode switching if the aggregation chip 210 is currently in the high-speed transmission mode). For transmission of a low-speed signal, when the monitoring module 220 detects a to-be-transmitted low-speed signal, the aggregation chip 210 is further configured to transmit the low-speed signal in a current mode.

In other words, transmission of a low-speed signal does not involve mode switching of the aggregation chip 210. When a low-speed signal arrives (is detected), the aggregation chip 210 directly transmits it in the current mode. For example, if the aggregation chip 210 is currently in the low-speed transmission mode, the low-speed signal is directly transmitted in the low-speed transmission mode. The low-speed transmission mode can meet transmission requirements for the low-speed signal. If the aggregation chip 210 is currently in the high-speed transmission mode, the low-speed signal is directly transmitted at a high speed in the high-speed transmission mode.

The aggregation chip 210 provided in embodiments of this application has two working modes: the low-speed transmission mode and the high-speed transmission mode. The low-speed transmission mode is used as the default mode to transmit low-speed signals. The high-speed transmission mode can be used to transmit not only high-speed signals, but also low-speed signals. The foregoing setting allows for a proper balance between reducing operating power consumption and reducing a mode switching frequency. Power consumption can be allocated based on the actual service requirement. When there is no high-speed signal, the chip works in the low-speed transmission mode by default. When a high-speed signal is detected, the chip is switched to the high-speed transmission mode to transmit the high-speed signal. This can avoid unnecessary power waste of the aggregation chip 210, to enhance battery endurance of the electronic device. In addition, a low-speed signal can be transmitted in any mode. This can avoid frequent mode switching of the aggregation chip 210, to ensure transmission stability of the aggregation chip 210, and can also reduce a loss of the aggregation chip 210 due to mode switching.

Further, the low-speed signal may be transmitted in the low-speed transmission mode. In this case, in a process in which the switching module 230 switches the aggregation chip 210 from the low-speed transmission mode to the high-speed transmission mode, the aggregation chip 210 may be transmitting the low-speed signal. In view of this, when switching the aggregation chip 210 from the low-speed transmission mode (namely, the low-power mode) to the high-speed transmission mode, the switching module 230 is specifically configured to: determine whether the aggregation chip 210 in the low-speed transmission mode is transmitting the low-speed signal, and if yes, wait until the low-speed signal is transmitted and then switch the aggregation chip 210 from the low-speed transmission mode to the high-speed transmission mode; or if no, directly switch the aggregation chip 210 from the low-speed transmission mode to the high-speed transmission mode without waiting. The foregoing setting can avoid adverse impact of mode switching on the transmission of the low-speed signal, such as data loss, to ensure data transmission integrity and reliability.

Optionally, in another possible implementation, in a mode switching process, if the aggregation chip 210 is transmitting the low-speed signal in the low-speed transmission mode, the transmission of the low-speed signal may be stopped, and the switching module 230 may directly switch the aggregation chip 210 from the low-speed transmission mode to the high-speed transmission mode without waiting for the transmission of the low-speed signal to be completed. After switching to the high-speed transmission mode, the low-speed signal may be transmitted in the high-speed transmission mode. Through the foregoing setting, mode switching of the aggregation chip is more timely, so that the high-speed signal can be transmitted more quickly, to meet the transmission requirements for the high-speed signal, such as a low latency, high response sensitivity, and the like.

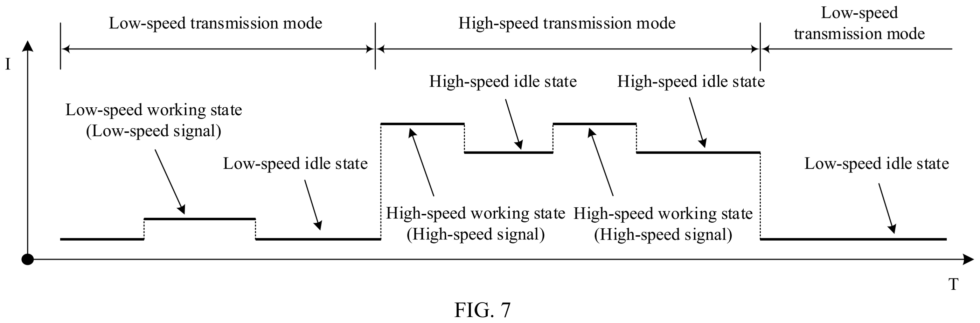

FIG. 7 is a sequence diagram of a current change when the aggregation chip 210 includes the low-speed transmission mode and the high-speed transmission mode. In a specific embodiment, as shown in FIG. 7, the aggregation chip 210 includes the low-speed transmission mode and the high-speed transmission mode. As a default working mode of the aggregation chip 210, the low-speed transmission mode can maintain transmission of low-speed signals. After being powered on, the chip enters the low-speed transmission mode.

In the low-speed transmission mode, a current on the aggregation chip 210 is low. The low-speed transmission mode includes a low-speed idle (idle) state and a low-speed working state. When no low-speed signal is detected, the aggregation chip 210 is in the low-speed idle state, that is, the aggregation chip 210 is in a no-load state. When a low-speed signal is detected, the aggregation chip 210 enters the low-speed working state, that is, the aggregation chip 210 transmits the low-speed signal in the low-speed transmission mode. In the low-speed working state, because the aggregation chip 210 has a load at this time, a current on the chip is slightly higher than that in the low-speed idle state.

The high-speed transmission mode includes a high-speed idle state and a high-speed working state. In the high-speed transmission mode, a current on the chip is significantly higher than that in the low-speed transmission mode. When the monitoring module 220 detects the to-be-transmitted high-speed signal, the switching module 230 switches the aggregation chip 210 from the low-speed transmission mode to the high-speed transmission mode, that is, the aggregation chip 210 enters the high-speed working state, and transmits the high-speed signal in the high-speed working state of the high-speed transmission mode. In this case, the current on the chip significantly increases in comparison with the previous low-speed transmission mode. The high-speed signal may be, for example, a signal that requires a low latency, such as from a TP, a camera module, or a SIM card.

After the high-speed signal is transmitted, the aggregation chip 210 enters the high-speed idle state, that is, the aggregation chip 210 is in the no-load state. In this case, the current on the chip decreases in comparison with the high-speed working state, but is still significantly higher than the current on the chip in the low-speed transmission mode. Setting the high-speed idle state (namely, the preset idle duration) can ensure that the chip can quickly enter the high-speed working state when continual high-speed signals are enabled. For example, at a moment when the aggregation chip 210 is in the high-speed idle state, the monitoring module 220 detects another high-speed signal. In this case, the chip re-enters the high-speed working state, that is, transmits the new high-speed signal in the high-speed transmission mode.

After the transmission is completed, the aggregation chip 210 re-enters the high-speed idle state. If no other to-be-transmitted high-speed signal is detected within the preset idle duration, the switching module 230 automatically switches the aggregation chip 210 from the high-speed transmission mode back to the low-speed transmission mode. According to the foregoing content and with reference to FIG. 7, it can be learned that the current on the aggregation chip 210 in the high-speed idle state is significantly higher than the current on the aggregation chip 210 in the low-speed idle state. Therefore, in this application, unnecessary power waste of the chip can be avoided through mode switching.

It should be noted that in the high-speed transmission mode, regardless of whether the aggregation chip 210 is in the high-speed idle state or the high-speed working state, if it is detected that a low-speed signal needs to be transmitted at this time, the aggregation chip 211 directly transmits the low-speed signal. A moment at which the aggregation chip 210 is switched from the high-speed transmission mode back to the low-speed transmission mode is not affected by a low-speed signal. In other words, the aggregation chip 210 may be switched from the high-speed transmission mode back to the low-speed transmission mode provided that no new high-speed signal (irrelevant to a low-speed signal) is detected within the preset duration after previous high-speed signal transmission is completed.

### (2) The aggregation chip 210 includes the sleep mode and the high-speed transmission mode.

In this implementation, the aggregation chip 210 may include two modes: the sleep mode and the high-speed transmission mode. In the sleep mode, signal transmission is not performed. Power consumption in the sleep mode is lower than that in the high-speed transmission mode. The sleep mode is used as the default mode of the aggregation chip 210. As the only working mode of the chip, the high-speed transmission mode can be used to transmit high-speed signals and low-speed signals. Therefore, the high-speed transmission mode in this implementation may also be referred to as a working mode.

When the monitoring module 220 detects the to-be-transmitted high-speed signal, the switching module 230 switches the aggregation chip 210 from the sleep mode to the high-speed transmission mode, and the aggregation chip 210 transmits the high-speed signal in the high-speed transmission mode. For transmission of a low-speed signal, when the monitoring module 220 detects a to-be-transmitted low-speed signal, the switching module 230 also switches the aggregation chip 210 from the sleep mode to the high-speed transmission mode, so that the aggregation chip 210 transmits the low-speed signal in the high-speed transmission mode.

In other words, regardless of whether the monitoring module 220 detects a to-be-transmitted high-speed signal or low-speed signal, the switching module 230 switches the aggregation chip 210 from the sleep mode to the high-speed transmission mode, to transmit the high-speed signal or low-speed signal in the high-speed transmission mode. In this case, the monitoring module 220 does not need to determine a class of a to-be-transmitted signal, and may wake up the aggregation chip 210 for signal transmission provided that the to-be-transmitted signal is detected. The foregoing setting helps reduce a design requirement on the monitoring module 220, and can simplify switching logic of the aggregation chip 210, which is easy to implement.

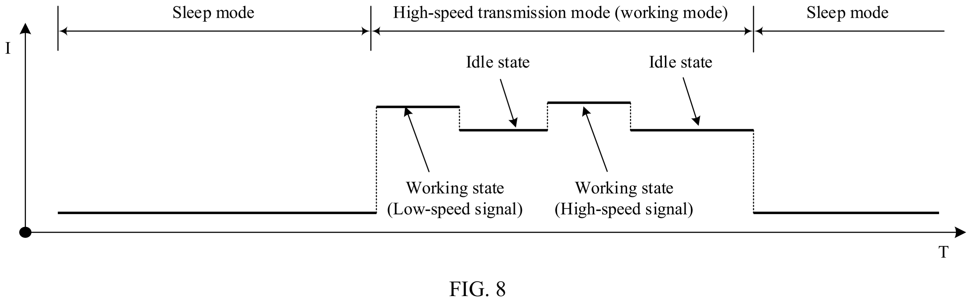

FIG. 8 is a sequence diagram of a current change when the aggregation chip 210 includes the sleep mode and the high-speed transmission mode. In a specific embodiment, as shown in FIG. 8, the aggregation chip 210 includes the sleep mode and the high-speed transmission mode. The sleep mode is used as a default working mode of the aggregation chip 210. After being powered on, the chip enters the sleep mode.

The high-speed transmission mode (namely, the working mode) includes an idle state and a working state. When the monitoring module 220 detects the to-be-transmitted low-speed signal, the switching module 230 switches the aggregation chip 210 from the sleep mode to the high-speed transmission mode, that is, the aggregation chip 210 enters the working state, and transmits the low-speed signal in the working state of the high-speed transmission mode.

After the high-speed signal is transmitted, the aggregation chip 210 enters the idle state, that is, the aggregation chip 210 is in a no-load state. Setting the idle state (namely, the preset idle duration) can avoid frequent mode switching of the aggregation chip 210. In the idle state, regardless of whether the monitoring module 220 detects a high-speed signal or low-speed signal, the chip enters the working state, that is, performs transmission in the high-speed transmission mode. For example, at a moment when the aggregation chip 210 is in the idle state, the monitoring module 220 detects a high-speed signal. In this case, the chip enters the working state, that is, transmits the high-speed signal in the high-speed transmission mode.

After the transmission is completed, the aggregation chip 210 re-enters the idle state. If no other to-be-transmitted signal is detected within the preset idle duration, the switching module 230 automatically switches the aggregation chip 210 from the high-speed transmission mode back to the sleep mode, to avoid unnecessary power waste.

### (3) The aggregation chip 210 includes the sleep mode, the low-speed transmission mode, and the high-speed transmission mode.

In this implementation, the aggregation chip 210 may include three modes: the sleep mode, the low-speed transmission mode, and the high-speed transmission mode. In the sleep mode, signal transmission is not performed. The low-speed transmission mode is used to transmit only low-speed signals. The high-speed transmission mode can be used to transmit not only high-speed signals, but also low-speed signals. Power consumption in the low-speed transmission mode is lower than that in the high-speed transmission mode and higher than that in the sleep mode. In other words, the power consumption in the low-speed transmission mode is between those in the sleep mode and the high-speed transmission mode. The sleep mode is used as the default mode of the aggregation chip 210.

When the monitoring module 220 detects the to-be-transmitted high-speed signal, the switching module 230 switches the aggregation chip 210 from the sleep mode to the high-speed transmission mode or from the low-speed transmission mode to the high-speed transmission mode, so that the aggregation chip 210 can transmit the high-speed signal in the high-speed transmission mode (there is no need for mode switching if the aggregation chip 210 is currently in the high-speed transmission mode). For transmission of a low-speed signal, when the monitoring module 220 detects a to-be-transmitted low-speed signal but does not detect the high-speed signal, if the aggregation chip 210 is currently in the high-speed transmission mode or the low-speed transmission mode, the aggregation chip 210 transmits the low-speed signal in the current mode. If the aggregation chip 210 is currently in the sleep mode, the switching module 230 switches the aggregation chip 210 from the sleep mode to the low-speed transmission mode, to transmit the low-speed signal in the low-speed transmission mode.

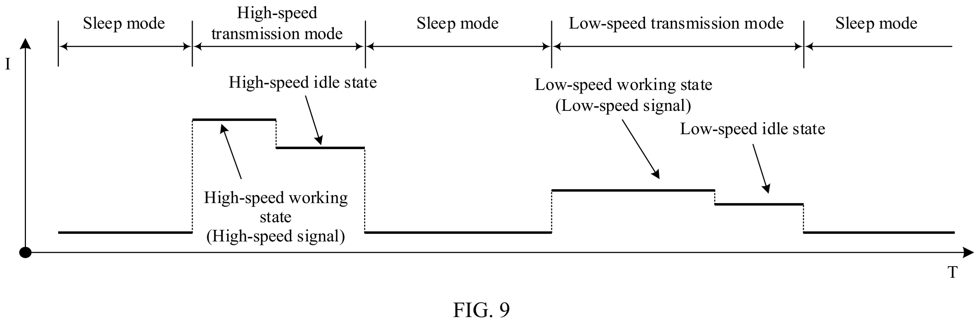

FIG. 9 is a sequence diagram of a current change when the aggregation chip includes the sleep mode, the low-speed transmission mode, and the high-speed transmission mode. In a specific embodiment, as shown in FIG. 9, the aggregation chip 210 includes the sleep mode, the low-speed transmission mode, and the high-speed transmission mode. The sleep mode is used as a default working mode of the aggregation chip 210. After being powered on, the chip enters the sleep mode.

The high-speed transmission mode includes a high-speed working state and a high-speed idle state. When the monitoring module 220 detects the to-be-transmitted high-speed signal, the switching module 230 switches the aggregation chip 210 from the sleep mode to the high-speed transmission mode, that is, the aggregation chip 210 enters the high-speed working state, and transmits the high-speed signal in the high-speed working state of the high-speed transmission mode. After the transmission is completed, the aggregation chip 210 enters the high-speed idle state. If no to-be-transmitted high-speed signal is detected within the preset idle duration, the switching module 230 automatically switches the aggregation chip 210 from the high-speed transmission mode back to the sleep mode or the low-speed transmission mode, to avoid unnecessary power waste.

The low-speed transmission mode includes a low-speed working state and a low-speed idle state. When the monitoring module 220 detects a to-be-transmitted low-speed signal but does not detect the high-speed signal (that is, detects only the low-speed signal), the switching module 230 switches the aggregation chip 210 from the sleep mode to the low-speed transmission mode, that is, the aggregation chip 210 enters the low-speed working state, and transmits the low-speed signal in the low-speed working state of the low-speed transmission mode. After the transmission is completed, the aggregation chip 210 enters the low-speed idle state. If no to-be-transmitted signal is detected within the preset idle duration (that is, no low-speed signal is detected, and no high-speed signal is detected), the switching module 230 automatically switches the aggregation chip 210 from the low-speed transmission mode to the sleep mode, to avoid unnecessary power waste. If a high-speed signal is detected within the idle duration, the chip is switched from the low-speed transmission mode to the high-speed transmission mode.

With reference to the foregoing control system 200, embodiments of this application further provide a control method for an aggregation chip. The control method may be applied to the control system 200 provided in the foregoing embodiments, or may be applied to an electronic device having the control system 200. The following are method embodiments provided in this application. The method embodiments correspond to the foregoing product (system) embodiments.

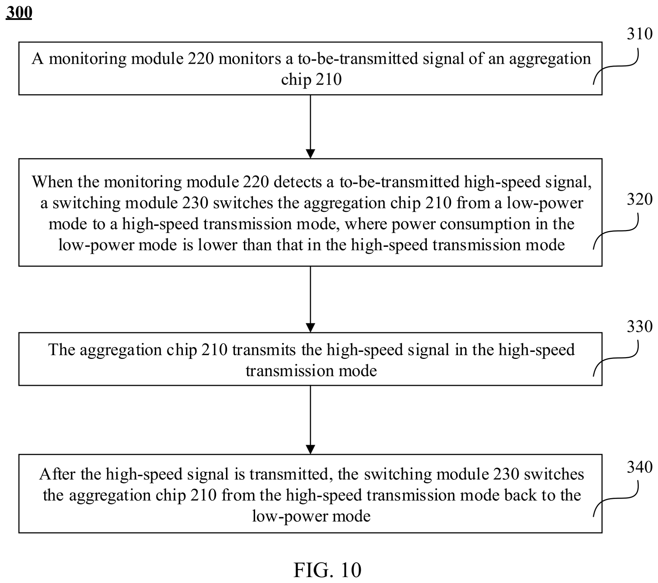

FIG. 10 is a flowchart of a control method 300 for an aggregation chip according to an embodiment of this application. As shown in FIG. 10, with reference to related content in FIG. 6, the control method 300 includes the following steps:
Step 310: A monitoring module 220 monitors a to-be-transmitted signal of an aggregation chip 210.
Step 320: When the monitoring module 220 detects a to-be-transmitted high-speed signal, a switching module 230 switches the aggregation chip 210 from a low-power mode to a high-speed transmission mode. Power consumption in the low-power mode is lower than that in the high-speed transmission mode.
Step 330: The aggregation chip 210 transmits the high-speed signal in the high-speed transmission mode.
Step 340: After the high-speed signal is transmitted, the switching module 230 switches the aggregation chip 210 from the high-speed transmission mode back to the low-power mode.

Optionally, in step 310, that the monitoring module 220 monitors the to-be-transmitted signal of the aggregation chip 210 specifically includes:
The monitoring module 220 determines, based on an instruction sent by a service module 240, that the to-be-transmitted high-speed signal is detected.

Optionally, in step 320, that the switching module 230 switches the aggregation chip 210 from the low-power mode to the high-speed transmission mode specifically includes:
The switching module 230 switches a clock scheme used by the aggregation chip 210 from a low-speed clock to a high-speed clock.

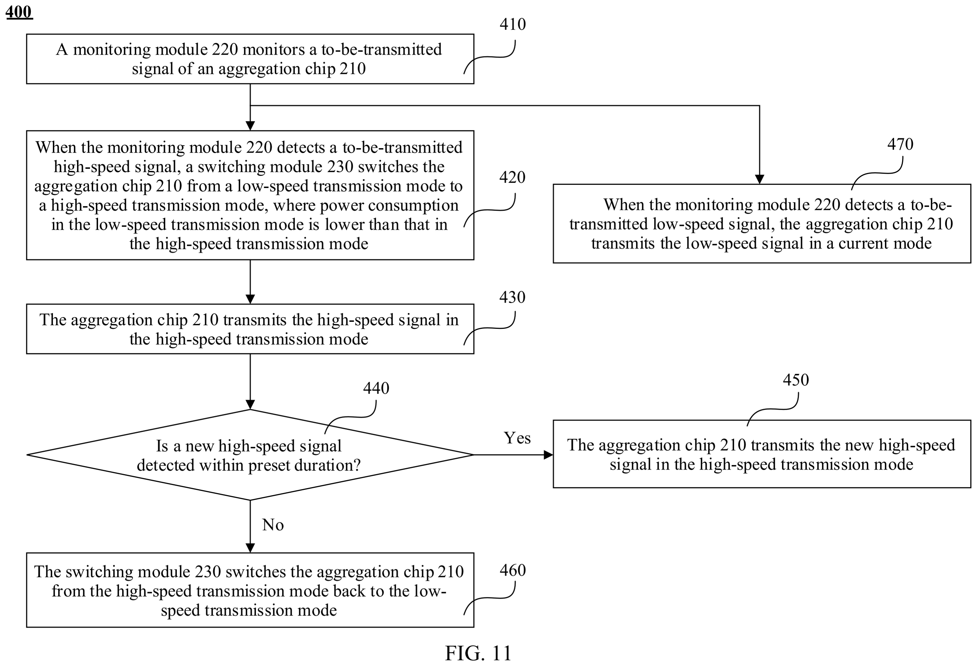

FIG. 11 is a flowchart of a control method 400 for an aggregation chip according to an embodiment of this application. In this embodiment, an aggregation chip 210 includes a low-speed transmission mode and a high-speed transmission mode. As shown in FIG. 11, with reference to related content in FIG. 6 and FIG. 7, the control method 400 includes the following steps:
Step 410: A monitoring module 220 monitors a to-be-transmitted signal of the aggregation chip 210.
Step 420: When the monitoring module 220 detects a to-be-transmitted high-speed signal, a switching module 230 switches the aggregation chip 210 from the low-speed transmission mode to the high-speed transmission mode. Power consumption in the low-speed transmission mode is lower than that in the high-speed transmission mode.
Step 430: The aggregation chip 210 transmits the high-speed signal in the high-speed transmission mode.
Step 440: The switching module 230 determines whether the monitoring module 220 detects a new to-be-transmitted high-speed signal within preset duration after the high-speed signal is transmitted. If yes, step 450 is performed. If no, step 460 is performed.
Step 450: If the monitoring module 220 detects a new to-be-transmitted high-speed signal within the preset duration after the high-speed signal is transmitted, the aggregation chip 210 transmits the new high-speed signal in the high-speed transmission mode.
Step 460: If the monitoring module 220 does not detect a new to-be-transmitted high-speed signal within the preset duration after the high-speed signal is transmitted, the switching module 230 switches the aggregation chip 210 from the high-speed transmission mode back to the low-speed transmission mode.
Step 470: When the monitoring module 220 detects a to-be-transmitted low-speed signal, the aggregation chip 210 transmits the low-speed signal in a current mode, for example, transmits the low-speed signal in the low-speed transmission mode or the high-speed transmission mode.

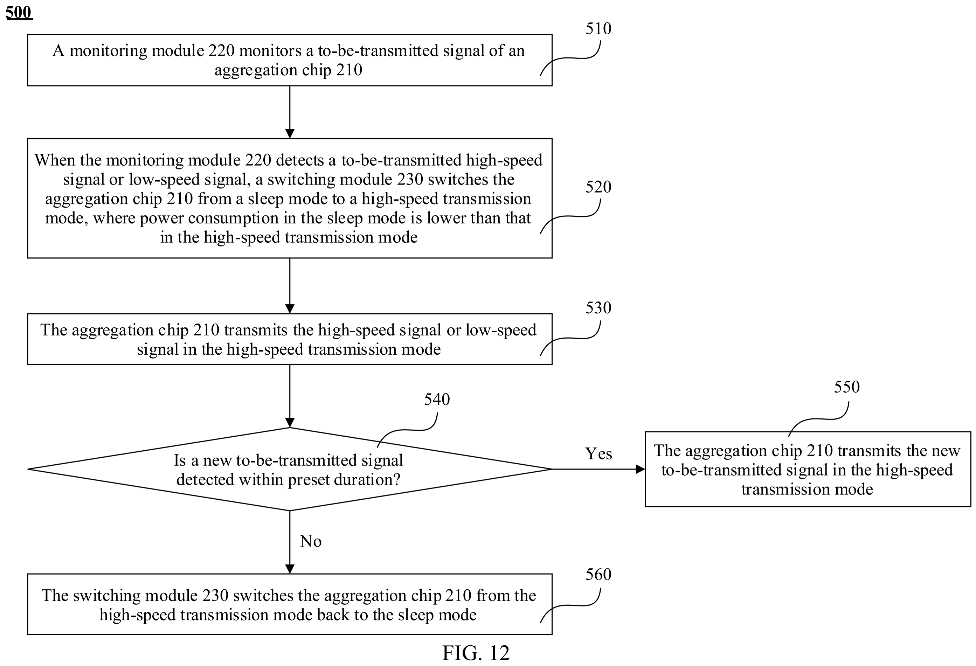

FIG. 12 is a flowchart of a control method 500 for an aggregation chip according to an embodiment of this application. In this embodiment, an aggregation chip 210 includes a sleep mode and a high-speed transmission mode. As shown in FIG. 12, with reference to related content in FIG. 6 and FIG. 8, the control method 500 includes the following steps:
Step 510: A monitoring module 220 monitors a to-be-transmitted signal of the aggregation chip 210.
Step 520: When the monitoring module 220 detects a to-be-transmitted high-speed signal, a switching module 230 switches the aggregation chip 210 from the sleep mode to the high-speed transmission mode. Power consumption in the sleep mode is lower than that in the high-speed transmission mode.

Alternatively, when the monitoring module 220 detects a to-be-transmitted low-speed signal, the switching module 230 switches the aggregation chip 210 from the sleep mode to the high-speed transmission mode.

Step 530: The aggregation chip 210 transmits the high-speed signal or low-speed signal in the high-speed transmission mode.

Step 540: The switching module 230 determines whether the monitoring module 220 detects a new to-be-transmitted signal within preset duration after the high-speed signal or low-speed signal is transmitted. If yes, step 550 is performed. If no, step 560 is performed.

Step 550: If the monitoring module 220 detects a new to-be-transmitted signal within the preset duration after the high-speed signal or low-speed signal is transmitted, the aggregation chip 210 transmits the new to-be-transmitted signal in the high-speed transmission mode.

Step 560: If the monitoring module 220 does not detect a new to-be-transmitted signal within the preset duration after the high-speed signal or low-speed signal is transmitted, the switching module 230 switches the aggregation chip 210 from the high-speed transmission mode back to the sleep mode.

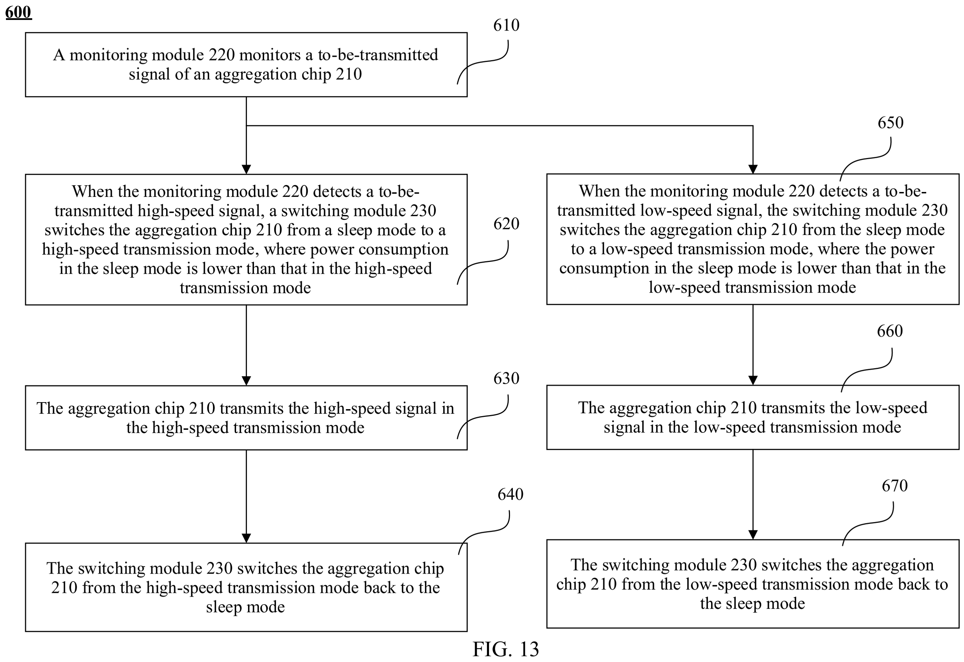

FIG. 13 is a flowchart of a control method 600 for an aggregation chip according to an embodiment of this application. In this embodiment, an aggregation chip 210 includes a sleep mode, a low-speed transmission mode, and a high-speed transmission mode. As shown in FIG. 13, with reference to related content in FIG. 6 and FIG. 9, the control method 600 includes the following steps:
Step 610: A monitoring module 220 monitors a to-be-transmitted signal of the aggregation chip 210.
Step 620: When the monitoring module 220 detects a to-be-transmitted high-speed signal, a switching module 230 switches the aggregation chip 210 from the sleep mode to the high-speed transmission mode. Power consumption in the sleep mode is lower than that in the high-speed transmission mode.
Step 630: The aggregation chip 210 transmits the high-speed signal in the high-speed transmission mode.
Step 640: After the high-speed signal is transmitted, the switching module 230 switches the aggregation chip 210 from the high-speed transmission mode back to the sleep mode.
Step 650: When the monitoring module 220 detects a to-be-transmitted low-speed signal but does not detect the high-speed signal, the switching module 230 switches the aggregation chip 210 from the sleep mode to the low-speed transmission mode. Power consumption in the low-speed transmission mode is between those in the sleep mode and the high-speed transmission mode.
Step 660: The aggregation chip 210 transmits the low-speed signal in the low-speed transmission mode.
Step 670: After the low-speed signal is transmitted, the switching module 230 switches the aggregation chip 210 from the low-speed transmission mode back to the sleep mode.

For descriptions of the control method 300, the control method 400, the control method 500, and the control method 600 shown in FIG. 10 to FIG. 13, refer to the foregoing descriptions of corresponding content. Details are not described herein again.

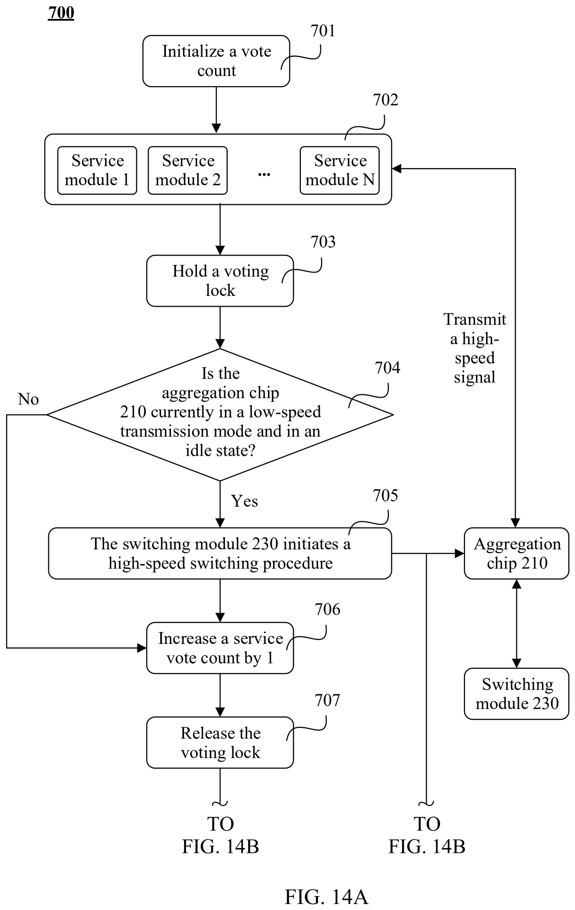

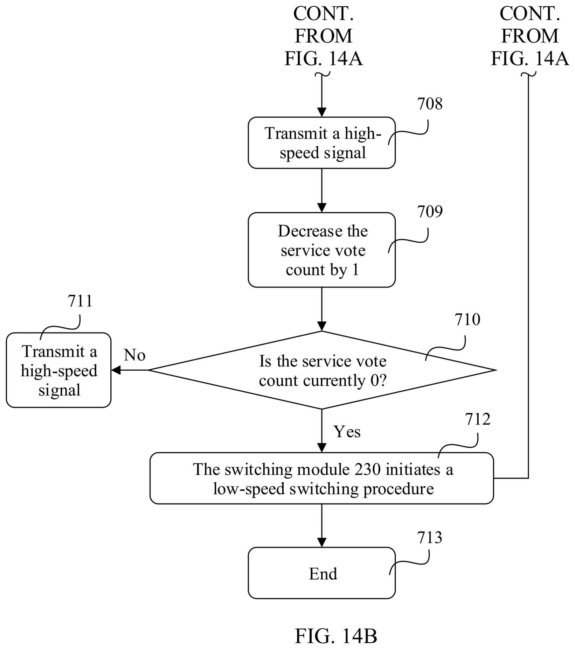

FIG. 14A and FIG. 14B are a flowchart of a control method 700 for an aggregation chip according to an embodiment of this application. In this embodiment, an aggregation chip 210 includes a low-speed transmission mode and a high-speed transmission mode. The control method 700 may be considered as a narrower and more specific implementation of the foregoing control method 400. As shown in FIG. 14A and FIG. 14B, with reference to related content in FIG. 6 and FIG. 7, the control method 700 includes the following steps:
Step 701: After a system is powered on, a vote count is initialized to 0.
Step 702: When a service module has a high-speed signal (high-speed data) that needs to be transmitted, the service module prepares data and initiates a voting procedure. In this case, the service module may send a voting instruction to a monitoring module 220.
Step 703: The monitoring module 220 determines, based on the voting instruction, that a high-speed signal needs to be transmitted, and holds a voting lock to avoid voting sequence disorder and a vote count error due to parallel voting of another service module.
Step 704: A switching module 230 determines whether the aggregation chip 210 is currently in the low-speed transmission mode, and whether the aggregation chip 210 is transmitting a low-speed signal if the aggregation chip 210 is in the low-speed transmission mode. If it is determined that the aggregation chip 210 is currently in the low-speed transmission mode and is in an idle state (that is, not transmitting a low-speed signal), step 705 is performed. Otherwise, step 706 is performed.

Data in a register of the aggregation chip 210 may be read to learn a current mode. A buffer of the aggregation chip 210 may be monitored, and data in the buffer may be parsed to learn whether a low-speed signal is being transmitted. For example, after the data is parsed, it is found that the data includes bus signals such as SPI, I2C, and UART serial port signals, and it may be determined that a low-speed signal is being transmitted. Alternatively, a current or voltage on the aggregation chip 210 may be monitored to determine whether it has a load, to determine whether it is working (that is, transmitting a low-speed signal).

Step 705: The switching module 230 initiates a high-speed switching procedure for the aggregation chip 210, that is, switches the aggregation chip 210 from the current low-speed transmission mode to the high-speed transmission mode, to transmit the high-speed signal.

Step 706: A service vote count is increased by 1.

Step 707: The voting lock is released to allow another service module to continue voting.

Step 708: The aggregation chip 210 transmits the high-speed signal from the service module in the high-speed transmission mode.

Step 709: After the high-speed signal is transmitted, the service vote count is decreased by 1.

Step 710: It is determined whether the service vote count is currently 0. If no, that is, the vote count is greater than 0 at this time, another high-speed signal is waiting to be transmitted or is being transmitted. In this case, step 711 is performed. If yes, the high-speed signal is transmitted and no other high-speed signal needs to be transmitted. In this case, step 712 is performed.

Step 711: The aggregation chip 210 transmits another high-speed signal subsequently from a service module in the high-speed transmission mode.

Step 712: The switching module 230 initiates a low-speed switching procedure for the aggregation chip 210, that is, switches the aggregation chip 210 from the current high-speed transmission mode to the low-speed transmission mode, to reduce power consumption of the chip.

Step 713: After the aggregation chip 210 enters the low-speed transmission mode, that is, enters a default mode, a control (switching) procedure for the aggregation chip 210 ends.

Embodiments of this application further provide a computer-readable storage medium. The computer-readable storage medium stores a computer program. When the computer program is run on an electronic device, the electronic device is enabled to perform the method performed by the monitoring module 220, the switching module 230, or the aggregation chip 210 in the foregoing embodiments.

Embodiments of this application further provide a computer program product, including computer program code. When the computer program code is run on an electronic device, the electronic device is enabled to perform the method performed by the monitoring module 220, the switching module 230, or the aggregation chip 210 in the foregoing embodiments.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control system for an aggregation chip, comprising:
a monitoring module, configured to monitor a to-be-transmitted signal of the aggregation chip;
a switching module, configured to switch the aggregation chip from a low-power mode to a high-speed transmission mode when the monitoring module detects a to-be-transmitted high-speed signal, wherein power consumption in the low-power mode is lower than that in the high-speed transmission mode; and
the aggregation chip, configured to transmit the high-speed signal in the high-speed transmission mode.

2. The control system according to claim 1, wherein after the high-speed signal is transmitted, the switching module is further configured to:
switch the aggregation chip from the high-speed transmission mode back to the low-power mode.

3. The control system according to claim 1 or 2, wherein if the monitoring module does not detect a new high-speed signal within preset duration after the high-speed signal is transmitted, the switching module is further configured to:
switch the aggregation chip from the high-speed transmission mode back to the low-power mode; wherein
if a new high-speed signal is detected within the preset duration, the aggregation chip is further configured to:
transmit the new high-speed signal in the high-speed transmission mode.

4. The control system according to any one of claims 1 to 3, wherein the low-power mode is a low-speed transmission mode, and when the monitoring module detects a to-be-transmitted low-speed signal, the aggregation chip is further configured to:
transmit the low-speed signal in a current mode.

5. The control system according to claim 4, wherein when switching the aggregation chip from the low-power mode to the high-speed transmission mode, the switching module is specifically configured to:
determine whether the aggregation chip in the low-speed transmission mode is transmitting the low-speed signal; and
if yes, switch the aggregation chip from the low-speed transmission mode to the high-speed transmission mode after the transmission is completed.

6. The control system according to any one of claims 1 to 3, wherein the low-power mode is a sleep mode, and when the monitoring module detects a to-be-transmitted low-speed signal, the switching module is further configured to:
switch the aggregation chip from the sleep mode to the high-speed transmission mode; wherein
the aggregation chip is further configured to:
transmit the low-speed signal in the high-speed transmission mode.

7. The control system according to any one of claims 1 to 3, wherein the low-power mode is a sleep mode, and when the monitoring module detects a to-be-transmitted low-speed signal but does not detect the high-speed signal, the switching module is further configured to:
switch the aggregation chip from the sleep mode to a low-speed transmission mode, wherein power consumption in the low-speed transmission mode is lower than that in the high-speed transmission mode and higher than that in the sleep mode; wherein
the aggregation chip is further configured to:
transmit the low-speed signal in the low-speed transmission mode.

8. The control system according to any one of claims 1 to 7, wherein when monitoring the to-be-transmitted signal of the aggregation chip, the monitoring module is specifically configured to:
determine, by the monitoring module based on an instruction sent by a service module, that the to-be-transmitted high-speed signal is detected.

9. The control system according to any one of claims 1 to 8, wherein when switching the aggregation chip from the low-power mode to the high-speed transmission mode, the switching module is specifically configured to:
switch a clock scheme used by the aggregation chip from a low-speed clock to a high-speed clock.

10. An electronic device, comprising the control system for an aggregation chip according to any one of claims 1 to 9.

11. A control method for an aggregation chip, comprising:
monitoring, by a monitoring module, a to-be-transmitted signal of an aggregation chip;
switching, by a switching module, the aggregation chip from a low-power mode to a high-speed transmission mode when the monitoring module detects a to-be-transmitted high-speed signal, wherein power consumption in the low-power mode is lower than that in the high-speed transmission mode; and
transmitting, by the aggregation chip, the high-speed signal in the high-speed transmission mode.

12. The method according to claim 11, wherein after the high-speed signal is transmitted, the method further comprises:
switching, by the switching module, the aggregation chip from the high-speed transmission mode back to the low-power mode.

13. The method according to claim 11 or 12, wherein if the monitoring module does not detect a new high-speed signal within preset duration after the high-speed signal is transmitted, the method further comprises:
switching, by the switching module, the aggregation chip from the high-speed transmission mode back to the low-power mode; wherein
if a new high-speed signal is detected within the preset duration, the method further comprises:
transmitting, by the aggregation chip, the new high-speed signal in the high-speed transmission mode.

14. The method according to any one of claims 11 to 13, wherein the low-power mode is a low-speed transmission mode, and when the monitoring module detects a to-be-transmitted low-speed signal, the method further comprises:
transmitting, by the aggregation chip, the low-speed signal in a current mode.

15. The method according to claim 14, wherein switching, by the switching module, the aggregation chip from the low-power mode to the high-speed transmission mode comprises:
determining, by the switching module, whether the aggregation chip in the low-speed transmission mode is transmitting the low-speed signal; and
if yes, switching the aggregation chip from the low-speed transmission mode to the high-speed transmission mode after the transmission is completed.

16. The method according to any one of claims 11 to 13, wherein the low-power mode is a sleep mode, and when the monitoring module detects a to-be-transmitted low-speed signal, the method further comprises:
switching, by the switching module, the aggregation chip from the sleep mode to the high-speed transmission mode, to transmit the low-speed signal.

17. The method according to any one of claims 11 to 13, wherein the low-power mode is a sleep mode, and when the monitoring module detects a to-be-transmitted low-speed signal but does not detect the high-speed signal, the method further comprises:
switching, by the switching module, the aggregation chip from the sleep mode to a low-speed transmission mode, wherein power consumption in the low-speed transmission mode is lower than that in the high-speed transmission mode and higher than that in the sleep mode; and
transmitting, by the aggregation chip, the low-speed signal in the low-speed transmission mode.

18. The method according to any one of claims 11 to 17, wherein monitoring, by the monitoring module, the to-be-transmitted signal of the aggregation chip comprises:
determining, by the monitoring module based on an instruction sent by a service module, that the to-be-transmitted high-speed signal is detected.

19. The method according to any one of claims 11 to 18, wherein switching, by the switching module, the aggregation chip from the low-power mode to the high-speed transmission mode comprises:
switching, by the switching module, a clock scheme used by the aggregation chip from a low-speed clock to a high-speed clock.
